# EUROPÄISCHE PATENTSCHRIFT

(11) **EP 3 412 126 B1**
(45) Veröffentlichungstag und Bekanntmachung des Hinweises auf die Patenterteilung: **04.11.2020**
(21) Anmeldenummer: 18186447.1
(22) Anmeldetag: 10.06.2013
(51) Int. Cl.: A01C 7/04, A01C 7/20

(54) **VERTEILAGGREGAT FÜR KÖRNIGES GUT, INSBESONDERE SÄAGGREGAT**
DISTRIBUTION DEVICE FOR GRANULAR MATERIAL, IN PARTICULAR SEEDING DEVICE
BOÎTIER DE DISTRIBUTION POUR MATÉRIEL GRANULAIRE, EN PARTICULIER SEMOIR

(30) Priorität: 12.06.2012 DE 102012105048
(43) Veröffentlichungstag der Anmeldung: 12.12.2018
(62) Teilanmeldung aus: 17169947.3
(73) Patentinhaber: Horsch Maschinen GmbH, 92421 Schwandorf (DE)
(72) Erfinder: FUNCK, Gerald, 74193 Schwaigern- Stetten (DE)
(74) Vertreter: Benninger, Johannes

(56) Entgegenhaltungen:
- EP-A1- 0 636 306
- DE-A1- 3 633 955

## Beschreibung

Die vorliegende Erfindung betrifft ein Verteilaggregat für körniges Gut wie Samenkörner, Dünger o. dgl., insbesondere ein Säaggregat mit den Merkmalen des unabhängigen Anspruchs 1.

Verteilvorrichtungen für körniges Gut wie insbesondere Sämaschinen sind in zahlreichen Ausführungsvarianten bekannt. Herkömmlicherweise erfolgt die Kornförderung mit Hilfe eines Luftstromes, dem die Körner zudosiert werden. Anschließend wird der als Trägermedium dienende Luftstrom einem Verteiler zugeführt, der in eine Mehrzahl von Schlauchleitungen münden kann, die schließlich in nebeneinander angeordneten Scharen der Sämaschine enden können. Die Dosierung der Körner ermöglicht die Variation des Volumenstroms an ausgebrachten Körnern. Weitere Möglichkeiten, auf die Dosierung der Körner in den einzelnen Leitungen, die zu den Scharen führen, Einfluss zu nehmen, bestehen in der Regel nicht. Die Körner können zwar dem Luftstrom regelmäßig zugeführt werden. Allerdings wird die Stetigkeit der Kornzuführung während des luftunterstützten Transports mehr oder weniger beeinträchtigt, so dass die Kornablage an den Säscharen oftmals ungleichmäßig erfolgt, was zu Nachteilen bei der Standraumzuteilung der einzelnen Pflanzen führen kann.

Eine Einrichtung zur Verstetigung eines Gutstromes einer Drill- bzw. Sämaschine ist aus der DE 196 36 787 C1 bekannt. In erster Linie sollen damit die Partikel-, Granulat- oder Kornabstände im Bereich einer volumetrischen Kornförderung verstetigt werden, so dass die Körner in weitgehender Vereinzelung abgelegt werden können. Die Kornförderung in einer Säleitung nach einem Dosieraggregat bzw. in dem Säschar erfolgt hierbei über eine aus Rinnen zusammengesetzte Kaskadenleitung oder -führung. bzw. eine Verteilrinne, über welche die Partikel oder Körner durch mehrmalige Richtungsänderungen vereinzelt und aufgereiht werden. Die Austragsleitung soll als mehrteilige Verteilleitung ausgebildet sein, deren einzelne Leitungselemente jeweils derart schräg zueinander angeordnet sind, dass sich die einzelnen Partikel durch den Einfluss der Schwerkraft hintereinander anordnen und zick-zack-förmig ausfließen, wobei zumindest das endseitige Leitungselement einen rinnenförmigen Querschnitt aufweist.

Eine für unterschiedliche Korngrößen und Samenarten universell einsetzbare Vorrichtung zum Vereinzeln und Abgeben von körnigem Gut, insbesondere eine Einzelkornsävorrichtung ist weiterhin in der DE 36 33 955 A1 offenbart. Hierzu wird ein rotierender schmaler Hohlzylinder mit Zellen bildenden Aussparungen an seiner offenen Stirnseite, einer feststehenden äußeren Abdeckung und einem innerhalb des Hohlzylinders angeordneten Abdeckring vorgeschlagen. Ein Vorratsbehälter ist durch eine Wand vom Hohlzylinder abgetrennt, die eine Öffnung zum Durchtritt einer begrenzten Menge an zu vereinzelndem Gut aufweist. Eine Länge der die Zellen bildenden Aussparungen soll ein Zwei- oder Mehrfaches der Länge der zu vereinzelnden Körner betragen. Zudem ist nahe einer hinteren Begrenzungsfläche der Aussparungen eine Saugöffnung vorgesehen. Der schnell rotierende Hohlzylinder nimmt einige Körner je Aussparung aus dem Körnervorrat auf, wobei die äußere Abdeckung die Aussparungen in der Befüllzone abdeckt und verhindert, dass die Körner herausfallen. Die Fliehkraft drückt die Körner in die Aussparungen, während ein Bürstenabstreifer für das Abstreifen überschüssiger Körner sorgt, die in den Vorrat zurückfallen. Im weiteren Bewegungsverlauf des Hohlzylinders endet eine äußere Begrenzungswand, so dass nicht vom Saugdruck festgehaltene Körner in den Aussparungen durch Fliehkräfte nach außen abgegeben werden und in den Vorrat zurückgeleitet werden. Ein zusätzlicher pneumatischer Abstreifer kann diese Korneinzelung unterstützen. Am Abgabeort wird der Unterdruck abgeschnitten, so dass die Körner aus den Aussparungen durch Fliehkraft und Schwerkraft abgegeben werden.

Die DE 38 22 437 A1 offenbart zudem eine Gutleiteinrichtung für derartige Einzelkornsäeinrichtungen, die dafür sorgen soll, dass überschüssige Gutteilchen aus den Aussparungen abgestreift und in einer Weise abgelenkt werden, dass sie vollständig dem Gutvorrat zugeführt werden.

Eine weitere Einzelkorndosiervorrichtung zur Einzelkornaussaat von Getreide ist aus der DE 41 16 724 A1 bekannt. Bei dieser bekannten Dosiervorrichtung sind bewegte Vereinzelungsöffnungen zur Anlagerung einzelner Körner durch löffelförmige Öffnungen in einer dünnwandigen Mantelfläche eines nach einer Seite offenen, rotierenden Zylinders gebildet. Die löffelförmigen Öffnungen überdecken sich mit einem Schlitz eines den Zylinder umschließenden Gehäuses, woraus die Ansaugöffnungen zum Ansaugen und zum vereinzelten Transport der Saatkörner gebildet sind.

Schließlich offenbart die EP 0 636 306 A1 ein Verteilaggregat für körniges Gut wie Saatgut. Das Verteilaggregat umfasst ein Gehäuse mit kreisbahnförmiger Innenmantelfläche, einer Einlassöffnung für körniges Gut, einer im Gehäuse konzentrisch rotierenden Fördereinrichtung für das körnige Gut, sowie einer Auslassöffnung. Die Fördereinrichtung weist mehrere Öffnungen an ihrem Außenbereich auf, die in einem ersten Gehäusebereich mit der Gehäuseinnenmantelfläche eine Tasche bilden, in der die Körner gedrängt werden und durch Zentrifugalkräfte, unterstützt durch die Fördereinrichtung, kreisförmig befördert werden. In einen zweiten Gehäusebereich mündet die Einlassöffnung. Der erste Gehäusebereich und der zweite Gehäusebereich sind durch eine fest stehende, konturierte Scheibe getrennt. Die Kontur der Scheibe soll dafür sorgen, dass überschüssige Körner abgestreift werden, die in den Taschen der Fördereinrichtung transportiert werden. Diese Körner stehen einer erneuten Förderung zur Verfügung.

Bei den bekannten Dosiereinrichtungen handelt es sich entweder um modifizierte Einzelkornsäaggregate, die zwar eine präzise Kornvereinzelung erlauben, die aber gegenüber volumetrisch dosierenden Drillmaschinen in ihrer Verarbeitungskapazität und in ihrem Kornvolumenstrom begrenzt sind und/oder in ihrem Aufbau und ihrer Funktion aufwändig und störanfällig sind. Die bekannt gewordenen Zusatzgeräte, welche die regelmäßige Abgabe der Saatkörner bei volumetrisch dosierenden Maschinen verbessern sollen, reichen hingegen nicht an die Vereinzelungsqualität herkömmlicher Einzelkornsäaggregate heran.

Die vorrangigen Ziele der Erfindung bestehen darin, die Abgabegenauigkeit und/oder die Kornabstände bei einer volumetrischen Kornförderung soweit zu verbessern, dass sich damit die Korndosierung hinsichtlich ihrer Vereinzelungsqualität einer Einzelkorndosierung annähert oder diese im Idealfall erreicht, wobei gleichzeitig ein hoher Kornvolumenstrom ermöglicht sein soll, mit einem einfachen und unanfälligen Aufbau und einer einfachen Funktion, wie er/sie für volumetrisch dosierende Drillmaschinen charakteristisch ist.

Diese genannten Ziele der Erfindung werden mit dem Gegenstand des unabhängigen Anspruchs erreicht. Merkmale vorteilhafter Weiterbildungen der Erfindung ergeben sich aus den abhängigen Ansprüchen. Zur Erreichung des genannten Ziels schlägt die Erfindung ein Verteilaggregat für körniges Gut wie Samenkörner, Dünger o. dgl. vor, die insbesondere als Säaggregat einer Verteil- oder Sämaschine eingesetzt werden kann. Das erfindungsgemäße Verteilaggregat umfasst ein Gehäuse mit annähernd kreisbahn- und/oder kreissegmentförmiger Innenmantelfläche, in das wenigstens eine Einlassöffnung für befördertes körniges Gut oder beförderte Samenkörnern mündet. Im Gehäuse rotiert konzentrisch eine Fördereinrichtung für das beförderte körnige Gut bzw. die beförderten Samenkörner. Eine Auslassöffnung zur Abgabe des vereinzelten körnigen Gutes oder der vereinzelten Samenkörner schließt sich annähernd tangential an die Innenmantelfläche an. Die konzentrisch im Gehäuse rotierende Fördereinrichtung weist an ihrem Außenbereich bzw. in Nähe ihres Außenumfangs eine oder mehrere Öffnungen und Mitnehmer, bspw. in Form von Nuten oder Stegen o. dgl. auf, die in einem ersten Gehäuse- und/oder Förderbereich mit der Gehäuseinnenmantelfläche eine Fördertasche bildet bzw. bilden, in welche die Körner auf ihrem Förderweg entlang der Innenmantelfläche des Gehäuses gedrängt werden. Die Förderung der Körner entlang dieser Innenmantelfläche erfolgt unter Unterstützung von Zentrifugalkräften und unterstützt durch die Fördereinrichtung annähernd kreisförmig, wobei die Körner gleichzeitig aus einem ungeordneten Förderstrom aufgereiht und vereinzelt werden. In einem sich an den ersten Förderbereich im Gehäuse anschließenden zweiten Bereich, der als Vereinzelungsbereich fungiert, wird durch eine veränderte Kontur der Innenmantelfläche des Gehäuses nur noch jeweils ein einzelnes Korn weiterbefördert, wogegen überschüssige Körner abgesondert und zur erneuten Förderung in den ersten Gehäusebereich zurückgeführt werden. Diese vereinzelte Kornförderung erfolgt im zweiten Förder- bzw. Vereinzelungsbereich unter dem Einfluss von Zentrifugalkräften und durch Unterstützung der Formgebung der Fördereinrichtung, die am Außenbereich bzw. am Außenumfang Öffnungen bzw. Mitnehmer oder Stege aufweist, die für die Mitnahme jeweils nur eines Kornes durch die rotierende Fördereinrichtung sorgen. Erfindungsgemäß weist die Innenmantelfläche des Gehäuses zumindest in der Nähe der Auslassöffnung eine nutförmige Struktur auf, deren Abmessungen mit der Größe der einzelnen Körner korrespondieren, wobei Teile der Vereinzelungsnut austauschbar sind, und wobei eine derartige Vereinzelungsnut als Teil des Gehäuses in die Innenmantelfläche einsetzbar ist.

In Weiterbildung des erfindungsgemäßen Verteilaggregats bildet die Innenmantelfläche des Gehäuses einzeln oder zusammen mit der Fördereinrichtung eine mindestens zweiseitige axiale Führung für die einzelnen Körner aus, welche jedes beförderte Korn axial führt, während es von der Fördereinrichtung mit Unterstützung von Zentrifugalkräften, welche größer als die Gewichtskraft sind, geschoben wird. Dabei kann vorgesehen sein, dass zumindest auf einer Seite die axiale Führungsbahn an einer Stelle in der Höhe reduziert wird und/oder im Querschnitt verjüngt ist, wodurch ein Freiraum gebildet ist, in welchen mitgenommene überschüssige Körner durch die Zentrifugalkraft gedrängt werden, so dass nur jeweils ein Korn in der gewünschten Führungsbahn verbleibt, was zu der gewünschten Kornvereinzelung führt. Zumindest auf einer Seite der axialen Führungsbahn kann ein Freiraum bestehen, in welchen mitgenommene überschüssige Körner durch die Zentrifugalkraft nach außen weg, über den Förderkreis hinaus, gedrängt werden, so dass nur jeweils ein Korn in der Fördereinrichtung verbleibt. Die abgedrängten Körner werden gesammelt und können ggf. bei weiteren Umläufen der rotierenden Fördereinrichtung mitgenommen und vereinzelt werden. Die Öffnungen und Mitnehmer der Fördereinrichtung bilden mit der Innenmantelfläche des Gehäuses eine Fördertasche, wobei die Mantelfläche von einem breiten in einen ganz schmal werdenden Bereich übergeht, so dass die schmale Mantelflächenbreite nur noch ausreichend Führung für ein zu förderndes Korn bietet.

Wahlweise kann bei dem erfindungsgemäßen Verteilaggregat auch vorgesehen sein, dass zumindest auf einer Seite die axiale Führungsbahn in der Breite verschmälert oder reduziert ist, wodurch ein Freiraum nach außen gebildet ist. Dieser Freiraum weist insbesondere die Form oder Gestalt einer Radialerweiterung auf. In diesem Freiraum bzw. in dieser Radialerweiterung können aufgrund seiner Formgebung und Dimensionierung überschüssige Körner durch die Zentrifugalkraft hineingedrängt werden, wodurch erreicht wird, dass im weiteren Förderverlauf bzw. in der weiteren Bewegungsbahn der einzelnen Körner immer nur jeweils ein Korn in der verschmälerten gewünschten Führungsbahn verbleibt. Somit wird durch die Formgebung und Gestaltung der sich verschmälernden Führungsbahn eine ideale Kornvereinzelung erreicht.

In Weiterbildung des erfindungsgemäßen Verteilaggregats wird der Körnerstrom der Fördereinrichtung durch die entsprechend gestaltete Einlassöffnung tangential zugeführt und verlässt das Gehäuse wieder in tangentialer Richtung. D.h., der Körnerstrom wird tangential in das Gehäuse zugeführt, rotiert dort um die Drehachse und verlässt anschließend wieder tangential das Gehäuse. Im Gehäuse befinden sich während der Rotation der Fördereinrichtung nahezu keine ruhenden Körner und kein nennenswerter Kornvorrat. Neben den vereinzelt durch die Auslassöffnung abgegebenen Körnern befinden sich im Gehäuse darüber hinaus einige überschüssige bzw. während des Vereinzelungsprozesses abgesonderte Körner des Körnerstroms, die eine oder mehreren Umdrehungen im Gehäuse verbleiben, um Förderlücken zu schließen. Diese Körner rotieren dabei normalerweise um die Achse des Gehäuses und stören aufgrund ihrer Vermischung mit nachgeförderten Körnern nicht den gesamten Förder- und/oder Kornvereinzelungsprozess. Die überschüssigen Körner werden den einströmenden Körnern zugeführt und werden anschließend auf Grund der zur Fördereinrichtung geneigten Mantelfläche in die Fördereinrichtung gedrängt.

Der zuführende Körnerstrom zur Fördereinrichtung kann vor und während der Aufnahme an der Mantelfläche entlang gleiten. Die Mantelfläche bildet vorzugsweise eine nahezu koaxiale Form zur Fördereinrichtung, wodurch der Körnerstrom zur aufnehmenden Fördereinrichtung nahezu gleichgerichtet ist. Die Absonderung der überschüssigen Körner kann einseitig oder auch beidseitig erfolgen.

Die Innenmantelfläche des Gehäuses kann der jeweiligen Kornform angepasst sein. Zudem kann auch die Öffnung der Fördereinrichtung der jeweiligen Kornform angepasst sein. Je nach auszubringenden Körnern bzw. deren Konturen und/oder Korngrößen sind somit unterschiedliche Gehäusegestaltungen und Dimensionierungen der wirksamen Förderflächen etc. möglich. Auch die Umdrehungsgeschwindigkeit der rotierenden Fördereinrichtung kann an den jeweiligen Förderbedarf für jeweils unterschiedliche Kornkonturen und/oder -größen angepasst werden.

Wahlweise kann die Kornzuführung per Förderluftstrom oder aus dem Kornvorratsbehälter erfolgen. Eine Durchförderung der Körner kann zudem auch bei stillstehender Fördereinrichtung gewährleistet werden. Hierbei muss die Förderung im Wesentlichen durch die tragende Luftströmung erfolgen.

Der Antrieb des fördernden Elementes bzw. der Fördereinrichtung kann sowohl elektromotorisch, hydraulisch, pneumatisch oder durch den Förderstrom selbst erfolgen. Auch die Rückführung der überschüssigen Körner kann wahlweise pneumatisch mit Unterstützung des Förderluftstroms oder mechanisch mit Unterstützung eines Leitelements in Form von einer Rampe erfolgen.

Nachfolgend finden sich in zusammengefasster Form nochmals einige Aspekte der vorliegenden Erfindung, insbesondere in konstruktiver Hinsicht. So umfasst das erfindungsgemäße Verteilaggregat ein Gehäuse mit annähernd kreisbahn- und/oder kreissegmentförmiger Innenmantelfläche, wenigstens einer Einlassöffnung für wahlweise in einer Luftströmung befördertes körniges Gut oder beförderte Samenkörner, einer im Gehäuse konzentrisch rotierenden Fördereinrichtung für das wahlweise in einer Luftströmung getragene körnige Gut bzw. die darin beförderten Samenkörner sowie wenigstens einer Auslassöffnung, die annähernd tangential an die Innenmantelfläche anschließt. Die Fördereinrichtung kann insbesondere eine im Gehäuse rotierende Scheibe mit wenigstens einer Stufe, Nut, Aussparung o. dgl. zur Mitnahme von körnigem Gut bzw. von Samenkörnern sein. Weiterhin weist die Innenmantelfläche des Gehäuses erfindungsgemäß zumindest in Nähe der Auslassöffnung eine nutförmige Struktur auf, deren Abmessungen mit der Größe der einzelnen Körner korrespondieren. Da das erfindungsgemäße Verteilaggregat in der Lage sein soll, unterschiedlich geformte und insbesondere Körner unterschiedlicher Größe zu verarbeiten und auszubringen, kann auch die nutförmige Struktur unterschiedlich geformt sein. Wenn also die Abmessungen der nutförmigen Struktur mit der Größe der einzelnen Körner korrespondieren sollen, so kann dies u.a. dadurch erreicht werden, dass verschiedene rotierende Fördereinrichtungen oder Scheiben unterschiedlicher Größe und Kontur zur Verfügung gestellt werden, die je nach Bedarf und Korngröße gegeneinander ausgetauscht werden können. Wahlweise ist es auch sinnvoll, bei einem Saatgutwechsel Teile der Vereinzelungsnut auszutauschen, sofern sich dies leicht bewerkstelligen lässt.

Wahlweise können die Körner auch auf rein mechanischem Weg in die Verteilvorrichtung geleitet, von der Fördereinrichtung mitgenommen und vereinzelt und anschließend mittels Schwerkraft durch die Auslassöffnung abgegeben werden. Bei einer solchen Variante kann der Antrieb der rotierenden Fördereinrichtung insbesondere mittels eines Elektromotors erfolgen.

Bei den verschiedenen Varianten der erfindungsgemäßen Verteilvorrichtung ist vorgesehen, dass sich die nutförmige Struktur in Umdrehungsrichtung der Fördereinrichtung in Richtung zur Auslassöffnung verjüngt, so dass dort nur noch ein einzelnes Korn Platz findet und das Gehäuse durch die Auslassöffnung verlässt, während benachbarte, überzählige Körner von der Mitnehmerstufe an der Auslassöffnung vorbei geleitet und im Gehäuse behalten werden. Wenn in diesem Zusammenhang von einer Verjüngung der nutförmigen Struktur in Umdrehungsrichtung die Rede ist, so ist damit in aller Regel eine abgestufte und plötzliche Verjüngung gemeint, oder eine allmähliche und sanfte. In einem ersten Bereich ist die Nut zur Befüllung relativ breit und kann mehrere Körner aufnehmen. In den anschließenden Bereichen korrespondiert die Breite der nutförmigen Struktur mit der Korngröße. Mit einer solchen Abstufung in der Struktur kann erreicht werden, dass überzählige Körner zuverlässig abgestreift werden und nur ein einzelnes Korn weiter zum Auslass transportiert wird. Grundsätzlich ist die Form und Kontur dieses Übergangsbereich nicht exakt definiert, da sich die sinnvolle und notwendige Kontur nach den jeweiligen Gleit- und Rolleigenschaften der verschiedenen Korngrößen und -formen richten kann.

Je Umdrehung der Fördereinrichtung kann somit ein einzelnes Korn die Auslassöffnung mit definierter Abgabegeschwindigkeit und -richtung verlassen, da die nutförmige Verjüngung der Innenmantelfläche in Umdrehungsrichtung der Fördereinrichtung annähernd tangential in der Auslassöffnung mündet. Ggf. kann es sinnvoll sein, im Abgabebereich eine kleine Stufe vorzusehen, die dem abspringenden Korn einen möglichst geringen Widerstand entgegen setzt. Um einen leichteren Saatgutwechsel vornehmen zu können, ist es erfindungsgemäß vorgesehen, Teile der Vereinzelungsnut auszutauschen. Bei einer solchen austauschbaren Vereinzelungsnut, die als Teil des Gehäuses in die Innenmantelfläche eingesetzt werden kann, ist eine leichte Abstufung unter Umständen unvermeidlich, die jedoch so klein sein muss, dass das abgegebene Korn problemlos darüber gleiten kann und zum Auslass befördert werden kann, ohne dort hängen zu bleiben oder eine unerwünschte Ablenkung zu erfahren.

Vorzugsweise ragt die wenigstens eine Stufe aus einer flachen, gewölbten oder anderweitig strukturierten Stirnseite der scheibenförmigen Fördereinrichtung und weist eine Breite auf, die mehrere Körner aufnehmen bzw. abstützen kann. Wahlweise kann die rotierende Fördereinrichtung zwei, drei, vier oder mehr gleichartig oder unterschiedlich geformte Mitnehmerstufen aufweisen, die jeweils gleichmäßig voneinander beabstandet über die flache, gewölbte oder strukturierte Stirnseite verteilt sind. Es sei darauf hingewiesen, dass die Wirkfläche der Vereinzelungsscheibe nicht zwingend flach sein muss, sondern je nach Bedarf gewölbt oder flügelartig geformt sein kann. So kann die scheibenartige Fördereinrichtung bzw. rotierende Scheibe bspw. sog. Freiformflächen aufweisen. Zudem kann auch die zu den Körnern weisende Fläche der Scheibe in Förderrichtung der Mitnehmerstufe leicht gewölbt sein, so dass eine schaufelähnliche Kontur gebildet ist. Auf diese Weise kann insbesondere bei länglichen Körnern erreicht werden, dass sich diese nicht aufstellen, sondern in die Nut nach vorne umfallen und zuverlässig gefördert werden. Weiterhin ist zu erwähnen, dass die Außenseite der rotierenden Fördereinrichtung oder Scheibe keineswegs flach bzw. zylindrisch sein muss, sondern mit Zacken oder Einschnitten versehen sein kann. So kann die Scheibe oder Fördereinrichtung bspw. die Außenkontur eines rotierenden Sägeblattes o. dgl. aufweisen, bei dem der Radius nicht konstant ist, so dass auch die Mantelfläche keine regelmäßige und ununterbrochene zylindrische Form aufweist.

Eine Ausführungsvariante des Verteilaggregats kann vorsehen, dass die Fördereinrichtung elektromotorisch angetrieben ist. Alternativ kann die Fördereinrichtung über die durch die Einlassöffnung ins Gehäuse geleitete Luftströmung angetrieben werden. Eine weitere alternative Ausführungsvariante kann bspw. auch vorsehen, dass auf derartige Antriebe verzichtet wird, so dass nur der Staudruck der in die Verteilvorrichtung geförderten Körner für den Antrieb der Fördereinrichtung bzw. Scheibe sorgt, die gleichzeitig die annähernd äquidistante Abgabe der Körner sicherstellt.

Die nutartige Strukturierung eines Abschnittes der Innenmantelfläche des Gehäuses, der sich an die radiale Außenseite der scheibenförmigen Fördereinrichtung anschließt, verbindet die Einlass- mit der Auslassöffnung und verjüngt sich dabei, so dass die vom Luftstrom getragenen Körner die Einlassöffnung passieren, von der Luftströmung und der rotierenden Fördereinrichtung in Verbindung mit der sich verjüngenden Strukturierung der Gehäuseinnenseite geordnet und vergleichmäßigt werden und schließlich die Auslassöffnung als weitgehend gleichmäßigen Gutstrom an Körnern verlassen. Die Formgebungen der korrespondierenden Wirkflächen des Gehäuses und der rotierenden Scheibe ermöglichen im Zusammenhang mit der gleichmäßigen Luftströmung und der Gestaltung der Innenmantelfläche des Gehäuses eine Vergleichmäßigung des Gutstroms (an Körnern, Saatkörnern etc.), die zu einer äquidistanten Abgabe am Auslass führt, was wiederum mit der gleichmäßigen und präzise einzuhaltenden Abgabegeschwindigkeit und Abgaberichtung für eine sehr gleichmäßige Kornvereinzelung sorgen kann. Durch Einströmung einer gleichmäßigen, ggf. leicht pulsierenden Luftströmung mit ungefähr konstantem Volumenstrom an Luft und an mitgenommenen Körnern in das Gehäuseinnere mit der darin rotierenden Fördereinrichtung wird ein funktionierendes Einzelkornsäaggregat zur Verfügung gestellt, bei dem die Körner vereinzelt und in gleichmäßigen Abständen voneinander durch die Auslassöffnung abgegeben werden.

Eine zentrale Welle der Fördereinrichtung kann bspw. elektromotorisch angetrieben sein. Wahlweise kann die zentrale Welle der Fördereinrichtung auch über die durch die Einlassöffnung ins Gehäuse geleitete Luftströmung angetrieben sein. Die Scheibe wird vorzugsweise elektromotorisch angetrieben, wobei im Interesse einer konstanten und äquidistanten Kornabgabe eine Modulierung der Antriebsdrehzahl nicht wünschenswert ist, sondern lediglich eine Anpassung an die Fahrgeschwindigkeit der zugehörigen Trägermaschine (z.B. der Sämaschine).

Die Offenbarung umfasst neben dem Verteilaggregat auch eine mehrreihige Verteilmaschine für körniges Gut wie Samenkörner, Dünger o. dgl., insbesondere eine Verteil- oder Sämaschine, die mehrere nebeneinander angeordnete, gleichartige Verteilaggregate gemäß einer der zuvor beschriebenen Ausführungsvarianten aufweist.

Nachfolgend finden sich nochmals verschiedene Aspekte der Erfindung in zusammengefasster oder abgewandelter Form, was die Funktion und Wirkungsweise des erfindungsgemäßen Aggregats noch besser verständlich machen soll. So dient das in unterschiedlichen Ausführungsbeispielen erläuterte erfindungsgemäße Verteilaggregat dem Ausbringen von körnigem Gut wie Samenkörnern, Dünger o. dgl. Das Verteilaggregat dient im vorliegenden Zusammenhang insbesondere als Säaggregat einer Verteil- oder Sämaschine und wird deshalb im Zusammenhang der Erfindungsbeschreibung auch allgemein als Säaggregat bezeichnet. Das Verteilaggregat bzw. Säaggregat umfasst ein Gehäuse mit einer zumindest abschnittsweise annähernd kreisbahn- und/oder kreissegmentförmigen Innenmantelfläche und einer Einlassöffnung für eine Luftströmung und darin befördertem körnigen Gut oder beförderten Samenkörnern. Weiterhin umfasst das Aggregat eine im Gehäuse konzentrisch rotierende Fördereinrichtung für das in der Luftströmung getragene körnige Gut bzw. die darin beförderten Samenkörner sowie eine Auslassöffnung, die annähernd tangential an die Innenmantelfläche anschließt und die Samenkörner bzw. das körnige Gut weitgehend regelmäßig zu einer Saatleitung, einer Förderleitung o. dgl. abgibt. Die Fördereinrichtung kann bspw. durch eine im Gehäuse rotierende Scheibe gebildet sein, die mindestens einen Absatz oder eine Mitnehmerstufe, wahlweise jedoch zwei oder mehrere regelmäßig voneinander beabstandete Mitnehmerstufen oder Absätze zur Mitnahme von körnigem Gut bzw. von Samenkörnern aufweisen kann.

Die im Luftstrom getragenen Körner werden durch den in Richtung zum Außenumfang des rotierenden Mitnehmers oder der rotierenden Fördereinrichtung tangential gebogenen Einlauf der Einlassöffnung in den Innenraum des Gehäuses geführt, in dem die rotierende Scheibe bzw. die Fördereinrichtung eine Art Dosiereinrichtung zur äquidistanten Abgabe der Körner in Richtung zum und aus dem Auslass bilden. Die Luftströmung sorgt zunächst dafür, dass sich die Körner entlang der Innenmantelfläche bewegen und zunächst entlang der gekrümmten Wandfläche bewegen, die tangential in den Grenzflächenbereich zwischen Gehäuse und Scheibe übergeht. Da die Innenmantelfläche im weiteren Verlauf in Richtung der Auslassöffnung eine geneigte Gehäusefläche oder eine anderweitig geformte nutförmige Struktur aufweist, deren Abmessungen ungefähr mit der Größe der einzelnen Körner korrespondiert, werden die Körner im weiteren Bewegungsverlauf zwischen der Wandfläche, entlang der geneigten Gehäusefläche und in Richtung der Auslassöffnung zur Säscheibe gedrängt, wo jedoch zwischen der Stufe und der geneigten Gehäusefläche jeweils nur ein einzelnes Korn Platz findet. Diese Kornführung innerhalb des Gehäuses wird auch dadurch begünstigt und erreicht, dass sich die nutförmige Struktur oder geneigte Gehäusefläche in Umdrehungsrichtung der Fördereinrichtung bzw. der Scheibe in Richtung zur Auslassöffnung verjüngt. Da zudem die nutförmige Verjüngung der Innenmantelfläche in Umdrehungsrichtung der Fördereinrichtung tangential in der Auslassöffnung mündet, werden jeweils einzelne Körner in gleichmäßigen Abständen durch die Auslassöffnung abgegeben.

Die Förderrichtung der Körner ist dadurch vorgegeben, dass sie mit dem Luftstrom durch die Einlassöffnung senkrecht nach unten in das Gehäuse eintreten, dort auf der schräg nach unten geneigte Wandfläche der Innenmantelfläche geleitet und in Richtung der geneigten Gehäusefläche befördert werden. Die Körner werden in dieser Phase der Bewegung von den Mitnehmern bzw. den Stegen der Scheibe der Fördereinrichtung mitgenommen, im Verlauf ihres Förderwegs vereinzelt und nach unten durch den Auslass abgegeben. Die Körner werden gleichzeitig durch die Gehäusewandung an die Säscheibe gedrängt. Der von der Säscheibe stirnseitig überstehende Mitnehmer bzw. die Mitnehmerstufe schiebt dabei die Körner in Umdrehungsrichtung der Scheibe an. Ein erstes Korn kann aufgrund der Geometrie der zusammenwirkenden Flächen etwas tiefer in die Säscheibe eintauchen, während die übrigen Körner nach außen abgedrängt werden und etwas weiter außen liegen bleiben bzw. sich dort undefiniert bewegen. Das beförderte Korn wird von der Säscheibe bzw. von deren Mitnehmerstufe angeschoben und hat an zwei Stellen Kontakt mit der Innenmantelfläche des umgebenden Gehäuses. Da die Wandflächen des Gehäuses gegenüber der rotierenden Scheibe ruhen, wird das Korn zudem ständig bewegt und in undefinierte Drehung versetzt, wodurch sich anhaftende Körner leichter lösen und das beförderte Korn von diesen übrigen Körnern isoliert wird.

Im weiteren Verlauf der geneigten Gehäusefläche beginnt ein Auswurfbereich, in dem sich die Gehäusekontur soweit ändert, dass nur ein schmaler Stegabschnitt das Korn führt. Die weiter außen liegenden Körner fallen dagegen aufgrund der Fliehkräfte und aufgrund der fehlenden radialen Führung durch den schmalen Stegabschnitt nach außen weg. Nach dem Verlassen der Säscheibe werden diese Körner nach außen gedrängt und über einen Rampenabschnitt der Innenmantelfläche in Richtung der Einlassöffnung und in deren Strömungsbereich zurückgeführt. Dieses axiale Wegführen der nicht durch die Auslassöffnung abgegebenen Körner ist wichtig, um genügend Freiraum für die Auslassöffnung zu schaffen. Die Kornführungsbereiche des Gehäuses werden auch als Füllbereich und als Vereinzelungsbereich bezeichnet. Im Füllbereich befinden sich die Mitnehmerstege der Vereinzelungsscheibe noch im Füllbereich. Ein Korn ist hierbei tief in die Scheibe und in die Nut der Wandfläche eingetaucht, während zwei weitere Körner aufgrund der schrägen Kontur ebenfalls in die Vereinzelungskammer drängen. Wenn sich die Scheibe in Richtung des Vereinzelungsbereichs weitergedreht hat, werden die Körner exakt vereinzelt. Das vereinzelte Korn wird hierbei nun in der schmäler gewordenen Nut weiter geführt, während die überschüssigen Körner seitlich vorbei, über den Förderkreis hinaus, über eine Schräge zurück geleitet werden.

Zu ergänzen ist, dass es auch Kornformen gibt, bei denen jeweils mehrere Körner in die Scheibe eintauchen bzw. in der Nut des Gehäuses liegen können. Bei der länglichen Kornform von Weizenkörnern verdrängen sich diese Körner gegenseitig, bis schließlich nur noch ein Korn liegen bleibt. Auch diese Körner können mittels des erfindungsgemäßen Aggregats vereinzelt werden.

Wie erwähnt, schließt sich bei den meisten Ausführungsvarianten des Verteilaggregats die Auslassöffnung tangential an die Innenmantelfläche an. Ihr relativ großer Öffnungsquerschnitt ist wichtig, um auch unerwünschte Fremdkörper wie Strohanteile o. dgl., die in der Luftströmung mitgetragen werden, auswerfen zu können. Die Auslassöffnung kann an der Gehäuseunterseite angeordnet sein.

Die rotierende Säscheibe wirkt mit den Gehäusewandflächen zusammen, indem die Körner zunächst durch die aufgrund der Luftströmung geschwindigkeitsbedingten Zentrifugalkräfte an die Gehäusewand gedrängt werden. Die abgeschrägte Gehäusewand sorgt dafür, dass die Ausfallsresultierende der Zentrifugalkräfte in Richtung zur Säscheibe zeigt. Im Auswurfbereich, in dem die überschüssigen Körner abgedrängt und abgeworfen werden sollen, ist die weitere Gehäusefläche in entgegengesetzter Richtung geneigt, wodurch die Körner von der Säscheibe weg bewegt werden.

Der weitere Verlauf der Kornförderung sieht vor, dass die Abgabe der Körner aus einer Kreisbahn der Vereinzelungsscheibe in tangentialer Richtung in eine geöffnete Kurve mit größerem und sich im weiteren Verlauf noch weiter öffnendem Radius erfolgt, die schließlich in einer Saatleitung, einem Fallrohr o. dgl. zur Abgabe der Körner in den Boden münden kann. Die Form des Kurvenverlaufs hängt stark von der Umdrehungsgeschwindigkeit der Scheibe ab. Wenn der Dosierer relativ langsam läuft, ergibt sich ein bogenförmiger oder gekrümmter Verlauf, da hierbei die Körner gleichmäßiger getragen werden. Sofern der Dosierer jedoch schneller läuft, kann die Abgaberichtung nahezu gerade sein. So können die abgegebenen Körner je nach Abgabegeschwindigkeit einen näherungsweise geraden Verlauf aufweisen, zumal die Distanz zwischen der Vereinzelungsscheibe und dem Säschar sehr kurz sein kann, so dass die Abgabekurve näherungsweise einen geraden Verlauf zeigen kann.

Die Wirkung der Mitnehmerstufen kann darauf beruhen, dass sie als Vereinzelungshilfen dienen. So können die Körner aufgrund einer Absenkung im Gehäuse während der Rotation der Vereinzelungsscheibe leicht bewegt werden. Eventuell auftretende Doppelbesetzungen werden dadurch leichter gelöst, so dass immer nur ein einzelnes Korn abgegeben wird.

Die Kornförderung erfolgt im Wesentlichen in insgesamt drei Phasen. In der ersten Phase werden die Körner von der Luft getragen. In der zweiten Phase werden die Körner mechanisch angeschoben, während sie in der dritten Phase wiederum von der Luft ausgetragen werden. Die dritte Phase ist normalerweise geradlinig, kann aber ggf. auch einen gekrümmten Verlauf aufweisen. Während in den ersten und dritten Phasen lediglich die Luftströmung für die Kornförderung sorgt, wobei eine sehr geringe Reibung herrscht, ist die Kornförderung in der zweiten Phase durch den mechanischen Anteil geprägt und dominiert, wobei ein hoher Reibungsanteil herrscht. Dadurch wird erreicht, dass die Körner von einem luftströmungsdominierten Transport in der ersten Phase in einen mechanisch dominierten und mechanisch geschobenen Transport in der zweiten Phase innerhalb des Gehäuses und von dort wiederum in den luftströmungsdominierten Transport in der dritten Phase gelangen, obwohl in allen drei Zonen nahezu dieselbe Volumenströmung an Luft herrscht. Ausschlaggebend für diese Funktion ist, dass die Körner mittels der Zentrifugalkraft radial nach außen an die Gehäusewand getrieben werden. Dies führt zu einem starken Abbremsvorgang der Körner auf Grund der erhöhten Reibung zur Wandung, wobei zusätzlich ein Abbremsen durch ein leichtes Verklemmen der Körner in der geneigten Gehäusefläche erreicht wird. Daher kann das drehende Element - die Scheibe - die Körner anschieben und sortieren, obwohl um die Scheibe herum teilweise hohe Luftgeschwindigkeiten herrschen. Zwar ist der Transportluftstrom ständig vorhanden und passiert das Gehäuse durch die Einlassöffnung und die Auslassöffnung, doch wird der Transport in der zweiten Phase vorübergehend auf das mechanische rotierende Element - die Fördereinrichtung bzw. die Säscheibe - übertragen. Die Abgabe der Körner durch die Auslassöffnung in das Fallrohr oder die Saatleitung kann daher sehr gleichmäßig erfolgen, da die Körner den eigentlichen Transportluftstrom nicht verlassen haben, sondern lediglich mechanisch unterstützt werden.

Da die Körner, noch während sie sich an der Vereinzelungsscheibe befinden, bereits von einer starken Luftströmung umschlossen sind, können sie sehr gleichmäßig in das Fallrohr übergeben werden. Vor und nach der Abgabe ist die Flussrichtung des Luft- und Körnerstroms identisch. Obwohl sich die Transportluft im Dosiersystem befindet, werden keine Körner umher gewirbelt. Vielmehr werden diese durch die Zentrifugalkräfte an die Innenmantelfläche des Gehäuses gedrückt, so dass es gelingen kann, die Körner an der Gehäusewandung zu vereinzeln.

Wahlweise kann die Scheibe auch abweichend von der obigen Beschreibung ausgestaltet sein, so dass die Scheibe bspw. stirnseitig aufgesetzte Mitnehmerstufen aufweisen kann, die mit Vertiefungen bzw. rechteckförmigen Nuten kombiniert sind, die unmittelbar an eine Stufe angrenzend am Außenumfang der Scheibe angeordnet und so dimensioniert sind, dass in den Nuten jeweils ein Korn Platz findet, während weitere Körner zwar von den Mitnehmerstufen befördert, jedoch im weiteren rotierenden Förderverlauf der Fördereinrichtung abgedrängt und in den Sammelvorrat im Gehäuse zurück befördert werden. Diese Methode der Kornvereinzelung wird durch die Zentrifugalkräfte der schnell rotierenden Fördereinrichtung unterstützt, die in Zusammenwirkung mit der Gestaltung der Innenmantelfläche des Gehäuses dafür sorgen, dass nur das einzelne in der Nut befindliche Korn weiter zum Auslass befördert wird.

Der Füllbereich kann relativ weit nach oben reichen, fast bis an den oberen Zenit der kreisförmigen Kornbewegung, und geht in den Vereinzelungsbereich über, bei dem überzählige Körner nach oben und außen von der rotierenden Scheibe abgedrängt werden, so dass jede der Mitnehmerstufen nur noch genau ein Korn weitertransportiert und in Richtung zur Auslassöffnung befördert. Die Wandfläche des Gehäuses weist im Übergang von den genannten Bereichen (Füllbereich zum Vereinzelungsbereich) einen ausgeprägten Absatz auf, so dass sich die Wandfläche in einer Stufe bzw. dem Absatz nach außen in Richtung zu einem größeren Durchmesser erweitert und einen Kornableitungsraum bildet, in den die zunächst noch von der Mitnehmerstufe entlang der Wandfläche beförderten Körner hineingleiten können. Nur das eine zu vereinzelnde Korn verbleibt an der Mitnehmerstufe der rotierenden Scheibe und wird von dieser weiterbefördert, nun aber unterhalb des Kornableitungsraumes, auf kleinerem Radius des Gehäuses, wo es in einer im Querschnitt dreieckförmigen Kornführungsrille oder Kornführungskante einzeln weitertransportiert wird, bis es in weitgehend kreisförmigem bzw. sich im weiteren Verlauf in der Kurve öffnenden Bewegungsverlauf in Richtung zur Auslassöffnung abgegeben wird.

Diese ausgeprägte Kornführungskante im Gehäuse kann bspw. die Kontur einer Absenkung aufweisen. Die Kornführungskante bzw. Rille in der kornführenden Innenmantelfläche des Gehäuses im Vereinzelungsbereich ist für die Vereinzelungswirkung des Verteilaggregats unverzichtbar, da ansonsten eine undefinierte Kornanzahl von jeder Mitnehmerstufe durch das Gehäuse in Richtung zum Auslass geschoben würde, wodurch die gewünschte Funktion und Wirkungsweise des Gerätes erheblich beeinträchtigt, wenn nicht zunichte gemacht wäre.

Die Größe und Kontur der optionalen Nuten, die jeweils an die Mitnehmerstege grenzen, sind jeweils an die zu handhabende Kornform und Korngröße ausgerichtet. Wahlweise kann die Scheibe auch eine sägeblattartige Kontur aufweisen, deren Außenumfang mit einer Vielzahl von Mitnehmerstegen versehen ist, die jeweils die Kontur von Sägezähnen aufweisen.

Scheibenvarianten mit einer größeren Anzahl von Mitnehmerstufen können sich insbesondere zur Vereinzelung und Aussaat von Raps eignen. Die Körner werden zunächst von den Mitnehmerstufen der rotierenden Scheibe aufgenommen. Der gesamte Füllbereich liegt hierbei vor dem sich allmählich nach außen in den Vereinzelungsbereich öffnenden Kornableitungsraum, wo solche Körner, die nicht einzeln in der dicht am Außenumfang der Scheibe liegenden Kornführungsrille geführt werden, nach außen abgeleitet und durch ihre umlaufende Bewegung in Richtung zu einem Rückführungsbereich bewegt werden. Diese den Rückführungsbereich passierenden Körner werden innerhalb des Gehäuses durch den dort herrschenden Luftstrom nochmals oder ggf. wiederholt zum Füllbereich geleitet und können dort erneut von der Scheibe aufgenommen und in die rotierenden Bewegungen versetzt werden. Der flache Kornableitungsraum geht im Rückführungsbereich in eine abgerundete Rampe über, die in den Gehäuseinnenraum mündet und die Körner in eine Bewegung zwingt, wo sie von der Auslassöffnung weggelenkt und in den Füllbereich im Gehäuse zurückführt werden. Die Rampe bildet somit eine Art Rückströmschräge für überschüssige Körner, mit deren Hilfe diese wieder ins Gehäuse zurückgeführt und dem Füllbereich zugeführt werden.

Im Füllbereich werden die Körner von den Mitnehmern mitgenommen, wobei ein einzelnes Korn tief in die Scheibe eingetaucht ist und zwei weitere Körner aufgrund der schrägen Kontur ebenfalls in die Vereinzelungskammer oder Kornführungskante drängen. Im Vereinzelungsbereich wird das vereinzelte Korn in der schmäler werdenden Nut bzw. Rille weitergeführt, während die überschüssigen Körner seitlich vorbei, über den Förderkreis hinaus, über die Rampe und die Schräge zurückgeleitet werden.

Die außerhalb der Kornführungsrille befindlichen und im Vereinzelungsbereich im Kornableitungsraum geführten Körner werden über die Rampe in eine Richtung schräg zur Oberfläche der Scheibe geleitet und damit von den exakt vereinzelten Körnern weggelenkt, die durch die Auslassöffnung nach unten aus dem Gehäuse abgegeben werden. Diese über die Rampe geführten Körner landen wieder im Füllbereich, und dies ggf. mehrfach.

Der Rückführungsbereich kann insbesondere über eine Rampe absatzlos, d.h. in abgerundeter Kontur, in eine breitere Schräge münden, die sich schließlich mit einer weiteren Schräge schneidet, die von der oberen Einlassöffnung ungefähr vertikal verläuft und durch welche Körner durch die Einlassöffnung in das Gehäuseinnere geleitet werden. Auf diese Weise können rückgeführte überschüssige und durch die Einlasslöffnung neu eintretende Körner zusammengeführt werden. Die Körner werden im Vereinzelungsbereich in zwei Gruppen aufgeteilt, nämlich vereinzelte Körner, welche nach unten abgegeben werden, und überschüssige Körner, welche im Gehäuse verbleiben. Die überschüssigen Körner werden hierbei über eine Schräge (Rückführungsbereich) am Austritt der vereinzelten Körner vorbeigeführt. Neue, von der Sämaschine zuströmende Körner gelangen über die Eingangsöffnung in das Gehäuse und treffen im Gehäusebereich auf die überschüssigen Körner aus dem Rückführungsbereich. Die neu eingeleiteten und überschüssigen Körner werden über die Schrägen bzw. schrägen inneren Gehäuseflächen an der Ausgangsöffnung vorbei geleitet. Anschließend werden die Körner aufgrund der geneigten Kontur der Gehäusefläche erneut zur Vereinzelungsscheibe gedrängt.

In ihrem Bewegungsverlauf bewegen sich die Körner axial und radial von der Scheibe weg und dann wieder zu dieser hin. Der Bewegungsablauf der Körner ist somit wie folgt: überschüssige Körner werden radial und axial von der Vereinzelungsscheibe weggeführt; anschließend werden die Körner am Ausgangskanal zur Abgabe der vereinzelten Körner vorbei geleitet und dabei radial der Vereinzelungsscheibe wieder zugeführt; zum Schluss werden die Körner wiederum axial zur Vereinzelungsscheibe geführt.

Zur Vereinzelung von Erbsen kann die Vereinzelungsscheibe drei um jeweils 120 Grad versetzt zueinander angeordnete Mitnehmerstufen und korrespondierende Nuten aufweisen, wobei hier die Stufen relativ flach, die Nuten jedoch relativ groß ausgebildet sein sollten. Eine besonders für die Vereinzelung von Weizenkörnern geeignete Variante der Vereinzelungsscheibe kann dagegen bspw. insgesamt acht gleichmäßig über die Scheibenstirnfläche verteilt angeordnete Mitnehmerstufen und korrespondierende Nuten aufweisen, wobei hier die Stufen wiederum relativ flach, die Nuten jedoch relativ groß ausgebildet sind. An der Scheibenstirnfläche der besonders zur Vereinzelung von Rapskörnern vorgesehenen Scheiben kann eine Vielzahl von Stegen und Nuten angeordnet sein, die eine relativ langsame Umdrehung der Scheibe und dennoch eine ausreichende Förderkapazität ermöglichen.

Bei einer weiteren Variante eines erfindungsgemäßen Dosiersystems bzw. Verteilaggregats kann eine ungefähr horizontal verlaufende Einlassöffnung vorgesehen sein, die wie bei den zuvor erläuterten Varianten ebenfalls tangential in die Innenmantelfläche des Gehäuses mündet. Die Einlauföffnung befindet sich hierbei an einer tief liegenden Stelle des Gehäuses, was den Körnern schon vor dem Eintritt oder während des Eintritts in das Gehäuse eine kreisförmige Bewegung aufprägen kann. Somit kann gewährleistet werden, dass die Körner an der Wandung bleiben und geführt werden und die Vereinzelungsscheibe möglichst weit außen erreichen. Die an der Bodenseite des Gehäuses angeordnete Auslassöffnung kann bei dieser Variante ebenfalls senkrecht nach unten münden.

Auch bei dieser Variante wird die Luftströmung entlang der Scheibe in tangentialer Richtung geführt, wobei es eine Einfüllseite hinter und eine Austrittseite vor der Vereinzelungsscheibe gibt. Die Luftströmung tritt durch die Einlassöffnung in das Gehäuse ein und umströmt die Dosierung zunächst in einem geschlossenen Kanal sowie anschließend in einem geöffneten Kanal, wonach schließlich die Zuführung zur Vereinzelungsscheibe erfolgt. Wie bei den zuvor erwähnten Ausführungsvarianten werden die Körner an die Vereinzelungsscheibe gedrängt und über einen Stegabschnitt zur Abgabe geschoben. Die verbleibenden Körner auf der Zuführseite gelangen auf Grund der Kontur des Stegabschnittes wieder in die Ausgangsströmung. Die verbleibenden Körner der Austrittseite gelangen über einen Kanal ebenfalls zur Zuführströmung.

Bei einer weiteren Ausführungsvariante des erfindungsgemäßen Verteilaggregats bzw. Säaggregats kann die Verteilung der Körner wahlweise auch ohne tragenden Luftstrom erfolgen. Die Verteilung der Körner erfolgt hier auf rein mechanischem Weg. Das Saatgut wird aus einem Behälter zugeführt. Anschließend transportiert eine Förderschnecke, welche von der Vereinzelungsscheibe angetrieben wird, die Körner zur Vereinzelungskammer. In der Vereinzelungskammer werden die Körner separiert, wobei ein Teil der überbleibenden Körner direkt in der Kammer verbleibt und über die Ausgangsöffnung hinweg erneut der Vereinzelungsscheibe zugeführt werden. Parallel dazu wird auch ein Teil der Übermenge wieder über eine Überströmöffnung zum Anfang der Schnecke transportiert, um ein Überladen zu vermeiden. Das Größenverhältnis des Durchmessers der Schnecke zum Durchmesser der Vereinzelungsscheibe kann je nach Bedarf sehr groß sein. Damit kann erreicht werden, dass trotz einer langsam laufenden Schnecke an der Vereinzelungsscheibe eine ausreichend hohe Umlaufgeschwindigkeit erreicht werden kann. Alternativ wäre hier auch eine Übersetzung denkbar. Die Schnecke und die Vereinzelungsscheibe werden bei dieser Ausführungsvariante vorzugsweise von einem Elektromotor angetrieben, dessen Drehzahl je nach Bedarf in Anpassung an die Vorschubgeschwindigkeit, den Kornabstand etc. variabel ist.

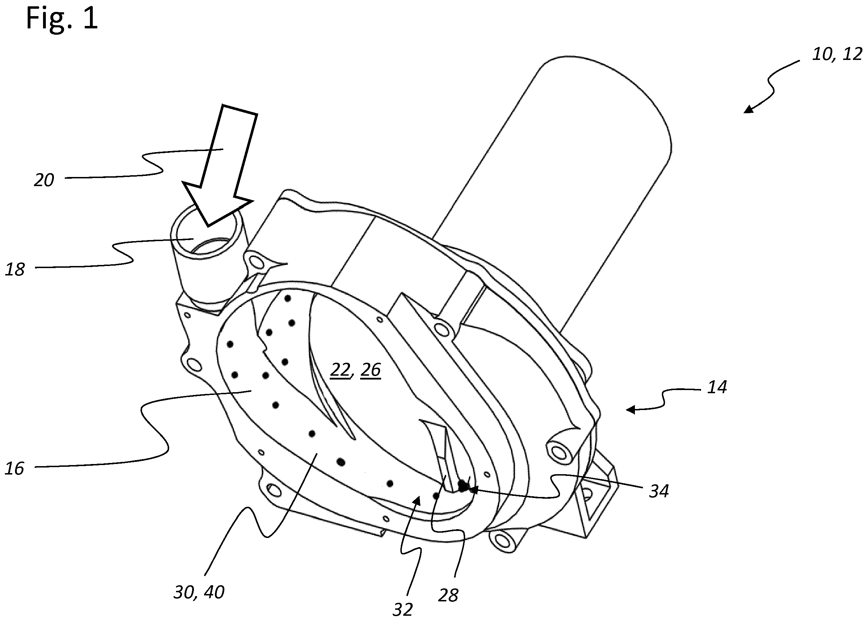

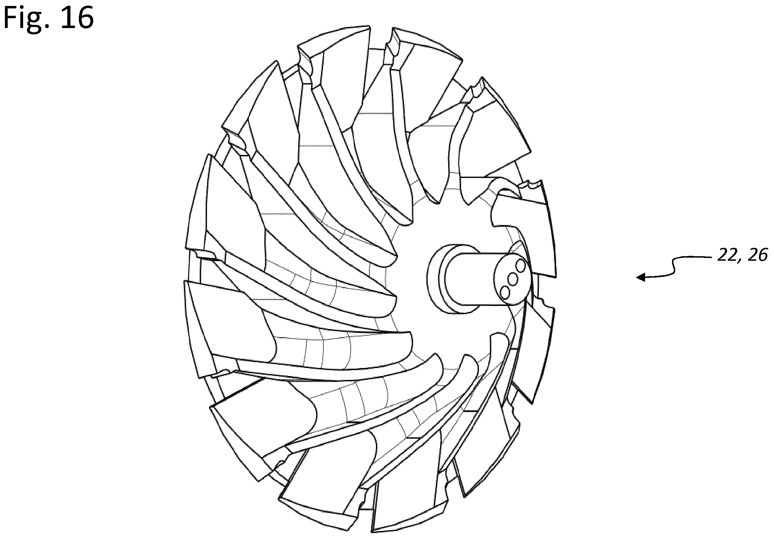

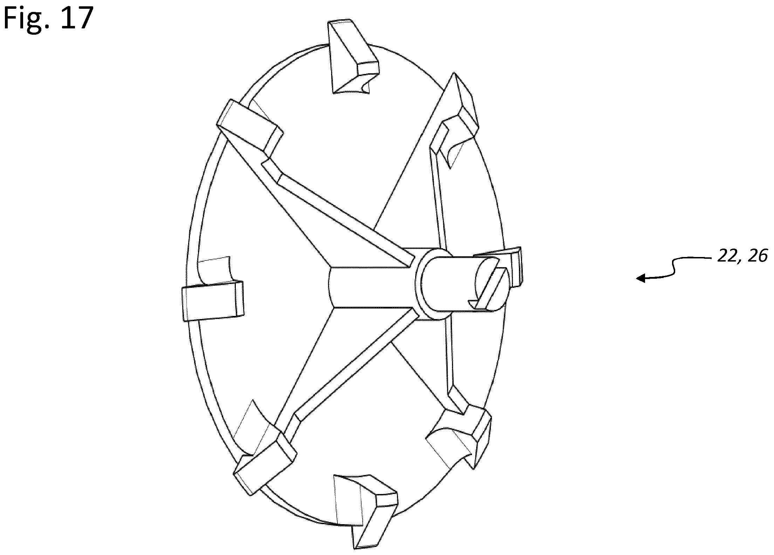

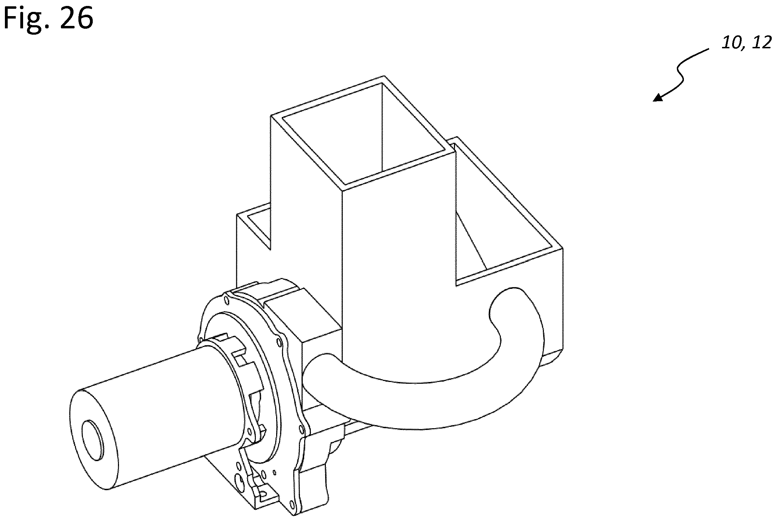

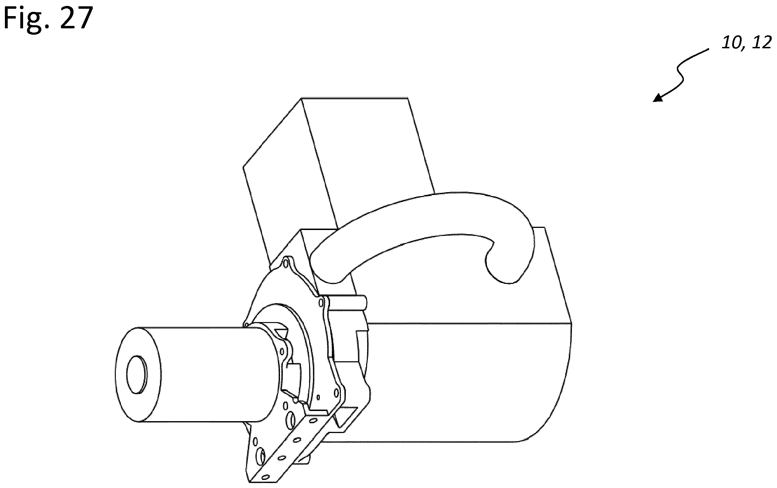

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. So zeigen die Figuren 1 bis 27 verschiedene schematische Perspektiv- und Detailansichten mehrerer Ausführungsvarianten eines erfindungsgemäßen Verteilaggregats.
Fig. 1 zeigt eine schematische Perspektivansicht einer Ausführungsvariante eines erfindungsgemäßen Verteilaggregats.
Fig. 2 zeigt eine Schnittansicht des Verteilaggregates.
Fig. 3a, Fig. 3b und Fig. 3d zeigen jeweils Detailansichten eines Kornführungsbereichs des Verteilaggregats.
Fig. 3c zeigt eine Längsschnittansicht einer möglichen Ausführungsvariante des Aggregats.
Fig. 4 zeigt eine Perspektivansicht einer weiteren Ausführungsvariante des Verteilaggregats.
Fig. 5 zeigt eine weitere Perspektivansicht des Aggregats gemäß Fig. 4.
Fig. 6a und Fig. 6b zeigen jeweils Detailansichten zur Verdeutlichung der Kornumlenkung innerhalb des Verteilaggregats.
Fig. 7a und Fig. 7b zeigen jeweils schematische Ansichten zur Verdeutlichung einer Kornumlenkung und Kornführung innerhalb des Verteilaggregats.
Fig. 8 zeigt eine weitere Variante der Kornführung.
Fig. 9a bis Fig. 9f zeigen jeweils Detailansichten einer Vereinzelungsscheibe des Verteilaggregats und ihrer verschiedenen Wirkungselemente.
Fig. 10a und Fig. 10b zeigen alternative Gestaltungen der Vereinzelungsscheibe.
Fig. 11 zeigt eine Variante einer sägezahnartigen Vereinzelungsscheibe.
Fig. 12 zeigt eine weitere Ausführungsvariante einer Vereinzelungsscheibe.
Fig. 13a bis 13f zeigen jeweils verschiedene Ansichten einer Ausführungsvariante des Verteilaggregats.
Fig. 14 bis Fig. 17 zeigen weitere alternative Gestaltungen der Vereinzelungsscheibe.
Fig. 18 bis Fig. 21 zeigen alternative Gestaltungen des Gehäuses mit einer veränderten Kornführung.
Fig. 22 zeigt einen Längsschnitt des Verteilaggregats.
Fig. 23a und Fig. 23b zeigen Detailansichten der Kornführung.
Fig. 24 bis Fig. 27 zeigen wiederum eine weitere Ausführungsvariante des Verteilaggregats.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

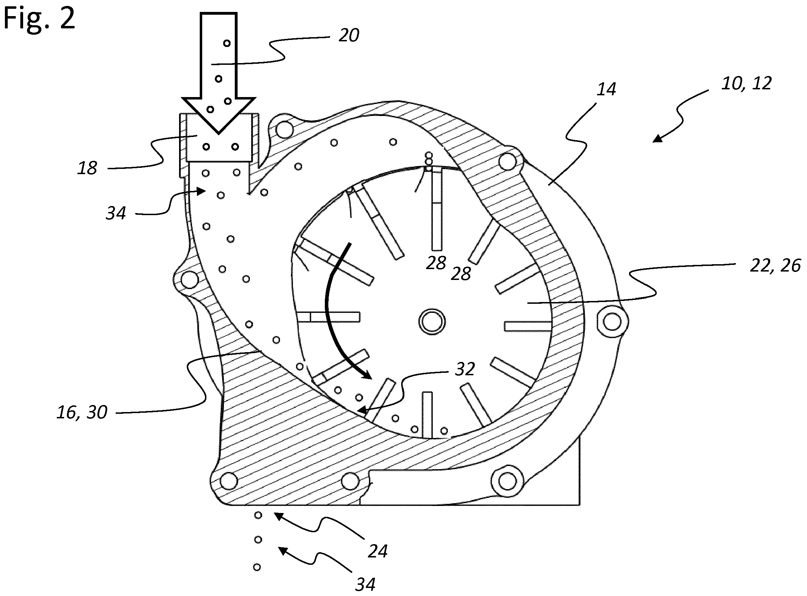

Die schematische Perspektivansicht der Fig. 1 verdeutlicht den Aufbau eines Ausführungsbeispiels eines erfindungsgemäßen Verteilaggregats 10 für körniges Gut wie Samenkörner, Dünger o. dgl. Das Verteilaggregat 10 dient im vorliegenden Zusammenhang insbesondere als Säaggregat 12 einer Verteil- oder Sämaschine und wird deshalb im Folgenden auch generell als Säaggregat 12 bezeichnet. Das Verteilaggregat 10 bzw. Säaggregat 12 umfasst ein Gehäuse 14 mit einer zumindest abschnittsweise annähernd kreisbahn- und/oder kreissegmentförmigen Innenmantelfläche 16 und einer Einlassöffnung 18 für eine Luftströmung 20 und darin befördertem körnigen Gut oder beförderten Samenkörnern. Weiterhin umfasst das Aggregat 10 bzw. 12 eine im Gehäuse 14 konzentrisch rotierende Fördereinrichtung 22 für das in der Luftströmung 20 getragene körnige Gut bzw. die darin beförderten Samenkörner sowie eine in der Fig. 1 nicht deutlich erkennbare Auslassöffnung 24, die annähernd tangential an die Innenmantelfläche 16 anschließt und die Samenkörner bzw. das körnige Gut weitgehend regelmäßig zu einer Saatleitung, einer Förderleitung o. dgl. abgibt. Im dargestellten Ausführungsbeispiel ist die Fördereinrichtung 22 durch eine im Gehäuse 14 rotierende Scheibe 26 gebildet, die eine, zwei (vgl. Fig. 1) oder mehrere (vgl. Fig. 2) regelmäßig voneinander beabstandete Mitnehmerstufen 28 zur Mitnahme von körnigem Gut bzw. von Samenkörnern aufweisen kann.

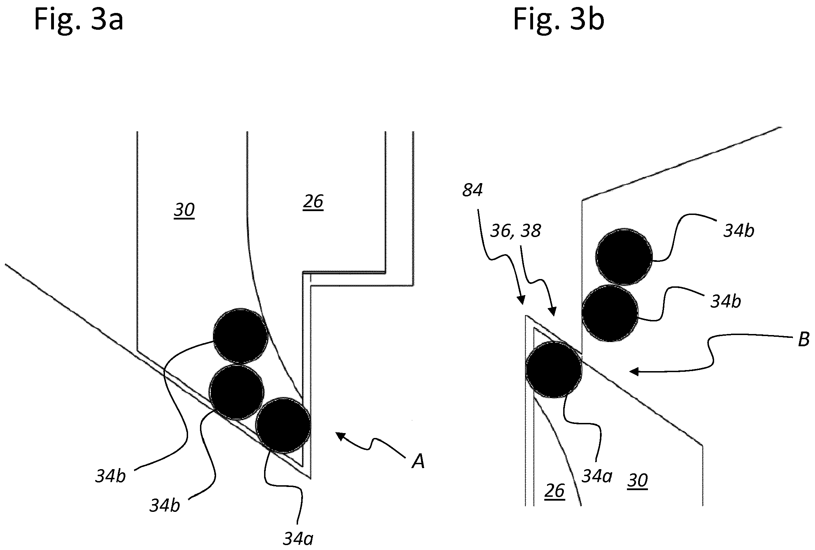

Wie es die Fig. 2 andeutungsweise erkennen lässt, werden die im Luftstrom 20 getragenen Körner durch den gebogenen Einlauf der Einlassöffnung 18 in den Innenraum des Gehäuses 14 geführt, in dem die rotierende Scheibe 26 bzw. die Fördereinrichtung 22 eine Art Dosiereinrichtung zur äquidistanten Abgabe der Körner in Richtung zum und aus dem Auslass 24 bilden. Die Luftströmung 20 sorgt zunächst dafür, dass sich die Körner entlang der Innenmantelfläche 16 bewegen und zunächst entlang der gekrümmten Wandfläche 30 bewegen. Da die Innenmantelfläche 16 im weiteren Verlauf in Richtung der Auslassöffnung 24 eine geneigte Gehäusefläche 32 oder eine anderweitig geformte nutförmige Struktur aufweist, deren Abmessungen ungefähr mit der Größe der einzelnen Körner korrespondiert, werden die Körner im weiteren Bewegungsverlauf zwischen der Wandfläche 30, entlang der geneigten Gehäusefläche 32 und in Richtung der Auslassöffnung 24 zur Säscheibe 26 gedrängt, wo jedoch zwischen der Stufe 28 und der geneigten Gehäusefläche 32 jeweils nur ein einzelnes Korn 34 Platz findet, wie dies die Figuren 3a und 3b verdeutlichen. Dies wird auch dadurch erreicht, dass sich die nutförmige Struktur oder geneigte Gehäusefläche 32 in Umdrehungsrichtung der Fördereinrichtung 22 bzw. der Scheibe 26 in Richtung zur Auslassöffnung 24 verjüngt. Da zudem die nutförmige Verjüngung der Innenmantelfläche 16 in Umdrehungsrichtung der Fördereinrichtung 22 tangential in der Auslassöffnung 24 mündet, werden jeweils einzelne Körner 34 in gleichmäßigen Abständen durch die Auslassöffnung 24 abgegeben.

Der in Fig. 2 gezeigte schematische Längsschnitt senkrecht zur Drehachse der Scheibe 26 bzw. der Fördereinrichtung 22 verdeutlicht deren Umdrehungsrichtung sowie die Förderrichtung der Körner 34, die mit dem Luftstrom 20 durch die Einlassöffnung 18 senkrecht nach unten in das Gehäuse 14 eintreten, dort auf der schräg nach unten geneigte Wandfläche 30 der Innenmantelfläche 16 geleitet und in Richtung der geneigten Gehäusefläche 32 befördert werden, wie dies auch bereits in Fig. 1 verdeutlicht ist. Die Körner 34 werden in dieser Phase der Bewegung von den Mitnehmern 28 bzw. den Stegen der Scheibe 26 der Fördereinrichtung 22 mitgenommen, im Verlauf ihres Förderwegs vereinzelt und nach unten durch den Auslass (nicht gezeigt) abgegeben, was durch die an der Gehäuseunterseite senkrecht nach unten in regelmäßigen Abständen abgegebenen Körner 34 angedeutet ist.

Wie es die Figuren 3a und 3b erkennen lassen, werden die Körner 34 durch die Gehäusewandung 30 an die Säscheibe 26 gedrängt. Der von der Säscheibe 26 überstehende Mitnehmer bzw. die Mitnehmerstufe 28 schiebt dabei die Körner 34 an. Ein erstes Korn 34a kann aufgrund der Geometrie der zusammenwirkenden Flächen etwas tiefer in die Säscheibe 26 eintauchen, während die übrigen Körner 34b abgedrängt werden und etwas weiter außen liegen bleiben (vgl. Fig. 3a). Das beförderte Korn 34a wird von der Säscheibe 26 bzw. von deren Mitnehmerstufe 28 angeschoben und hat an zwei Stellen Kontakt mit der Innenmantelfläche 16 des umgebenden Gehäuses 14. Da die Wandflächen 16, 30, 32 des Gehäuses 14 gegenüber der rotierenden Scheibe 16 ruhen, wird das Korn 34a zudem ständig bewegt und in undefinierte Drehung versetzt, wodurch sich anhaftende Körner 34b leichter lösen und das beförderte Korn 34a von diesen übrigen Körnern 34b isoliert wird.

Im weiteren Verlauf der geneigten Gehäusefläche 32 beginnt ein Auswurfbereich 36, im dem sich die Gehäusekontur soweit ändert, dass nur ein schmaler Stegabschnitt 38 das Korn 34a führt (vgl. Fig. 3b). Die weiter außen liegenden Körner 34b fallen dagegen aufgrund der Fliehkräfte und aufgrund der fehlenden radialen Führung durch den schmalen Stegabschnitt 38 nach außen weg. Nach dem Verlassen der Säscheibe 26 werden diese Körner 34b nach außen gedrängt und über einen Rampenabschnitt 40 (vgl. Fig. 1) der Innenmantelfläche 16 in Richtung der Einlassöffnung 18 und in deren Strömungsbereich 20 zurückgeführt. Dieses axiale Wegführen der nicht durch die Auslassöffnung 24 abgegebenen Körner 34b ist wichtig, um genügend Freiraum für die Auslassöffnung 24 zu schaffen.

Der in Fig. 3a dargestellte Abschnitt des Kornführungsbereichs des Gehäuses soll im vorliegenden Zusammenhang auch als Füllbereich A bezeichnet werden, während der in Fig. 3b dargestellte Abschnitt als Vereinzelungsbereich B bezeichnet werden kann. Im Füllbereich A (Fig. 3a) befinden sich die Mitnehmerstege der Vereinzelungsscheibe 26 noch im Füllbereich. Ein Korn 34a ist hierbei tief in die Scheibe 26 und in die Nut der Wandfläche 30 eingetaucht, während zwei weitere Körner 34b aufgrund der schrägen Kontur ebenfalls in die Vereinzelungskammer drängen. Wenn sich die Scheibe 26 in Richtung des Vereinzelungsbereichs B (Fig. 3b) weitergedreht hat, werden die Körner 34 exakt vereinzelt. Das vereinzelte Korn 34a wird hierbei nun in der schmäler gewordenen Nut weiter geführt, während die überschüssigen Körner 34b seitlich vorbei, über den Förderkreis hinaus, über eine Schräge zurück geleitet werden.

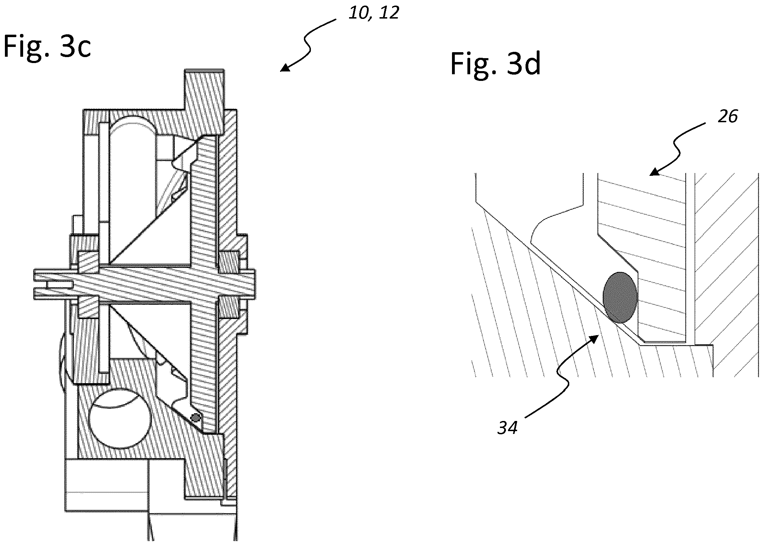

Die Längsschnittdarstellung der Fig. 3c sowie die Detaildarstellung der Fig. 3d verdeutlichen die Anordnung der einzelnen Bauteile einer weiteren Variante des Aggregats 10 in ihrer Zusammenwirkung und die Förderung der Körner 34 an der rotierenden Scheibe 26, die das Förderelement bildet. Auch bei dieser Variante wird das beförderte Korn 34 von der Säscheibe 26 bzw. von deren Mitnehmerstufen angeschoben, hat jedoch nur an einer Stelle Kontakt mit der Innenmantelfläche des umgebenden Gehäuses.

Zu den anhand der Figuren 3a und 3b sowie der Figuren 3c und 3d beschriebenen Varianten ist zu ergänzen, dass es auch Kornformen gibt, bei denen jeweils mehrere Körner in die Scheibe eintauchen bzw. in der Nut des Gehäuses liegen können. Bei der länglichen Kornform von Weizenkörnern verdrängen sich diese Körner gegenseitig, bis schließlich nur noch ein Korn liegen bleibt. Auch diese Körner können mittels des erfindungsgemäßen Aggregats vereinzelt werden, auch wenn dies anhand der Fig. 3 nicht explizit gezeigt ist.

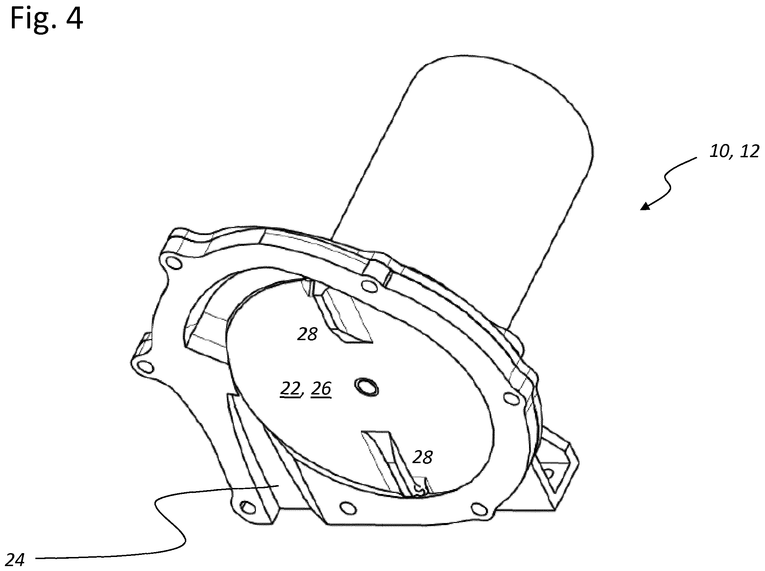

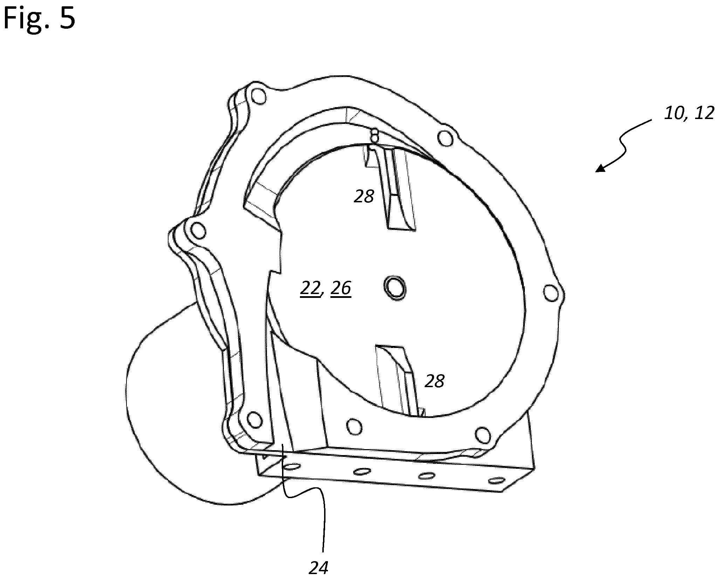

In den Detaildarstellungen der Fig. 4 und der Fig. 5 ist der tangential an die Innenmantelfläche 16 anschließende Verlauf der Auslassöffnung 24 deutlicher erkennbar. Ihr relativ großer Öffnungsquerschnitt ist wichtig, um auch unerwünschte Fremdkörper wie Strohanteile o. dgl., die in der Luftströmung 20 mitgetragen werden, auswerfen zu können. Die Detaildarstellungen der Figuren 4 und 5 zeigen die Anordnung der Auslassöffnung 24 an der Gehäuseunterseite sowie eine Ausführungsvariante der Scheibe 26 mit nur zwei Stegen bzw. Mitnehmerstufen 28, die jeweils gegenüber liegend am Außenumfang angeordnet sind.

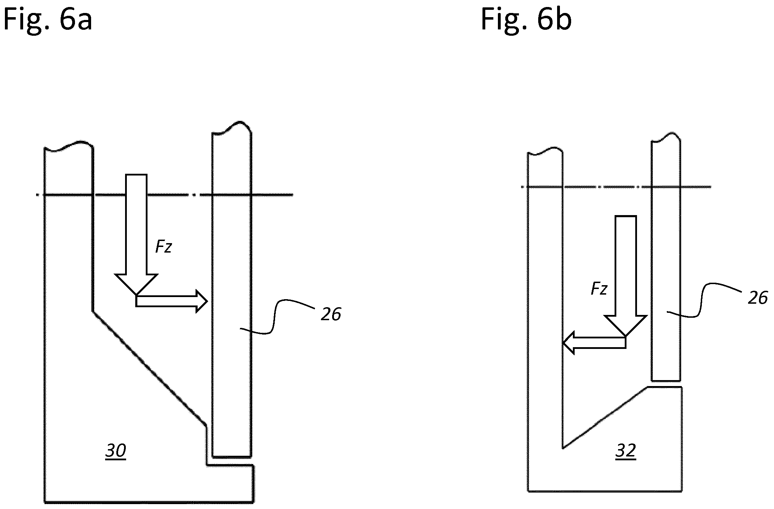

Die schematischen Darstellungen der Figuren 6a und 6b verdeutlichen die Zusammenwirkung der rotierenden Säscheibe 26 mit den Gehäusewandflächen 16, 30 und 32. So werden die Körner 34 zunächst durch die aufgrund der Luftströmung 20 geschwindigkeitsbedingten Zentrifugalkräfte Fz an die Gehäusewand 30 gedrängt. Die abgeschrägte Gehäusewand 30 sorgt dafür, dass die Ausfallsresultierende von Fz in Richtung zur Säscheibe 26 zeigt (vgl. Fig. 6a). Im Auswurfbereich 36, in dem die überschüssigen Körner 34b abgedrängt und abgeworfen werden sollen, ist die weitere Gehäusefläche 32 in entgegengesetzter Richtung geneigt, wodurch die Körner in Pfeilrichtung von der Säscheibe 26 weg bewegt werden (vgl. Fig. 6b).

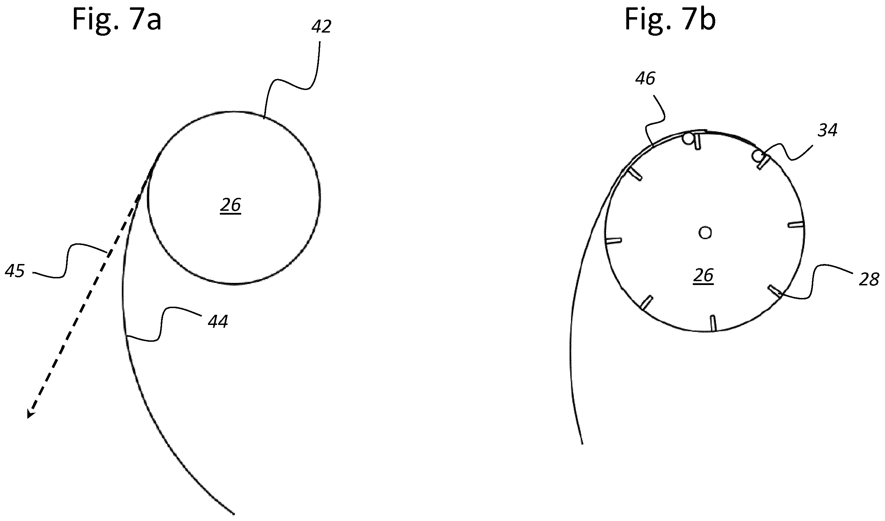

Die schematische Darstellung der Fig. 7a verdeutlicht den weiteren Verlauf der Kornförderung. So erfolgt die Abgabe der Körner 34a aus einer Kreisbahn 42 der Vereinzelungsscheibe 26 in tangentialer Richtung in eine geöffnete Kurve 44 mit größerem und sich im weiteren Verlauf noch weiter öffnendem Radius, die schließlich in einer Saatleitung, einem Fallrohr o. dgl. zur Abgabe der Körner in den Boden münden kann, was jedoch hier nicht dargestellt ist. Die Form des Kurvenverlaufs hängt stark von der Umdrehungsgeschwindigkeit der Scheibe 26 ab. Wenn der Dosierer relativ langsam läuft, dürfte sich der bogenförmige oder gekrümmte Verlauf 44 ergeben, da hierbei die Körner gleichmäßiger getragen werden. Sofern der Dosierer jedoch schneller läuft, kann die Abgaberichtung nahezu gerade sein. Wie es die unterbrochene Pfeillinie 45 in Fig. 7a andeutet, können die abgegebenen Körner je nach Abgabegeschwindigkeit einen näherungsweise geraden Verlauf aufweisen, zumal die Distanz zwischen der Vereinzelungsscheibe 26 und dem Säschar u.U. sehr kurz sein kann, so dass die Abgabekurve 44 näherungsweise den geraden Verlauf 45 gemäß Fig. 7a zeigen kann.

Die schematische Darstellung der Fig. 7b zeigt die Wirkung der Mitnehmerstufen 28, die als Vereinzelungshilfen dienen. So können die Körner 34 aufgrund einer Absenkung 46 im Gehäuse 14 während der Rotation der Vereinzelungsscheibe 26 leicht bewegt werden. Eventuell auftretende Doppelbesetzungen werden dadurch leichter gelöst, so dass immer nur ein einzelnes Korn 34a abgegeben wird.

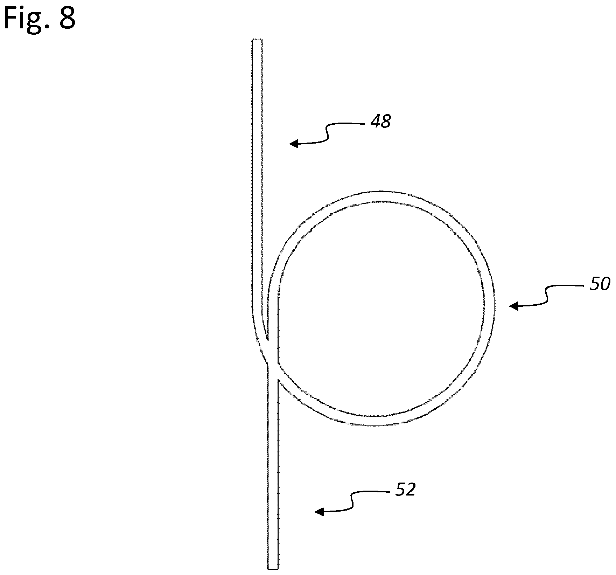

Der angedeutete Förderverlauf der Fig. 8 verdeutlicht insgesamt drei Phasen der Kornförderung. In der ersten Phase 48 werden die Körner von der Luft getragen. In der zweiten Phase 50 werden die Körner mechanisch angeschoben, während sie in der dritten Phase 52 wiederum von der Luft ausgetragen werden. Die dritte Phase 52 ist in Fig. 8 geradlinig eingezeichnet, kann aber ggf. auch den in Fig. 7 gezeigten gekrümmten Verlauf 44 aufweisen. Während in den ersten und dritten Phasen 48 und 52 lediglich die Luftströmung für die Kornförderung sorgt, wobei eine sehr geringe Reibung herrscht, ist die Kornförderung in der zweiten Phase durch den mechanischen Anteil geprägt und dominiert, wobei ein hoher Reibungsanteil herrscht. Dadurch wird erreicht, dass die Körner 34 von einem luftströmungsdominierten Transport in der ersten Phase 48 in einen mechanisch dominierten und mechanisch geschobenen Transport in der zweiten Phase 50 innerhalb des Gehäuses 14 und von dort wiederum in den luftströmungsdominierten Transport in der dritten Phase 52 gelangen, obwohl in allen drei Zonen 48, 50 und 52 nahezu dieselbe Volumenströmung an Luft herrscht. Ausschlaggebend für diese Funktion ist, dass die Körner mittels der Zentrifugalkraft Fz radial nach außen an die Gehäusewand getrieben werden (vgl. Fig. 3). Dies führt zu einem starken Abbremsvorgang der Körner auf Grund der erhöhten Reibung zur Wandung, wobei zusätzlich ein Abbremsen durch ein leichtes Verklemmen der Körner in der geneigten Gehäusefläche 32 erreicht wird. Daher kann das drehende Element - die Scheibe 26 - die Körner anschieben und sortieren, obwohl um die Scheibe 26 herum teilweise hohe Luftgeschwindigkeiten herrschen. Zwar ist der Transportluftstrom ständig vorhanden und passiert das Gehäuse 14 durch die Einlassöffnung 18 und die Auslassöffnung 24, doch wird der Transport in der zweiten Phase 50 vorübergehend auf das mechanische rotierende Element - die Fördereinrichtung 22 bzw. die Säscheibe 26 - übertragen. Die Abgabe der Körner durch die Auslassöffnung 24 in das Fallrohr oder die Saatleitung kann daher sehr gleichmäßig erfolgen, da die Körner den eigentlichen Transportluftstrom nicht verlassen haben, sondern lediglich mechanisch unterstützt werden.

Da die Körner, noch während sie sich an der Vereinzelungsscheibe 26 befinden, bereits von einer starken Luftströmung umschlossen sind, können sie sehr gleichmäßig in das Fallrohr übergeben werden. Vor und nach der Abgabe ist die Flussrichtung des Luft- und Körnerstroms 20 identisch. Obwohl sich die Transportluft im Dosiersystem befindet, werden keine Körner umher gewirbelt. Vielmehr werden diese durch die Zentrifugalkräfte Fz an die Innenmantelfläche 16 des Gehäuses 14 gedrückt, so dass es gelingen kann, die Körner an der Gehäusewandung zu vereinzeln.

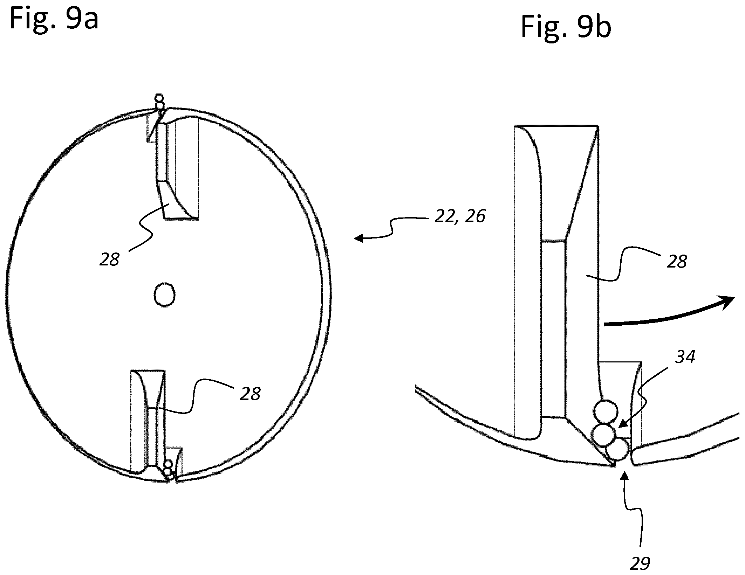

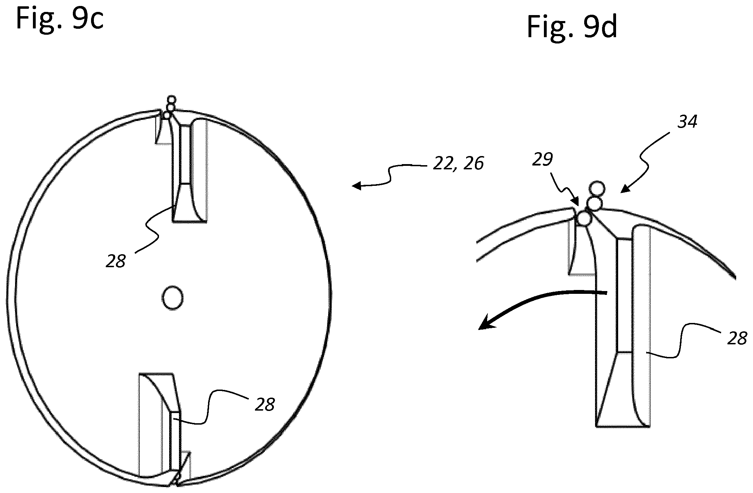

Die Perspektivansicht der Fig. 9a und die Detaildarstellung der Fig. 9b zeigen eine Ausführungsvariante der Scheibe 26 und der darauf aufgesetzten Mitnehmerstufen 28, die hier mit Vertiefungen bzw. rechteckförmigen Nuten 29 kombiniert sind, die unmittelbar an eine Stufe 28 angrenzend am Außenumfang der Scheibe 26 angeordnet und so dimensioniert sind, dass in den Nuten 29 jeweils ein Korn 34 Platz findet (vgl. Fig. 9b), während weitere Körner 34 zwar von den Mitnehmerstufen 28 befördert, jedoch im weiteren rotierenden Förderverlauf der Fördereinrichtung 22 abgedrängt und in den Sammelvorrat im Gehäuse zurück befördert werden. Wie auch die Figuren 9c und 9d verdeutlichen, wird diese Methode der Kornvereinzelung durch die Zentrifugalkräfte der schnell rotierenden Fördereinrichtung 22 unterstützt, die in Zusammenwirkung mit der Gestaltung der Innenmantelfläche des Gehäuses dafür sorgen, dass nur das einzelne in der Nut 29 befindliche Korn 34 weiter zum Auslass befördert wird.

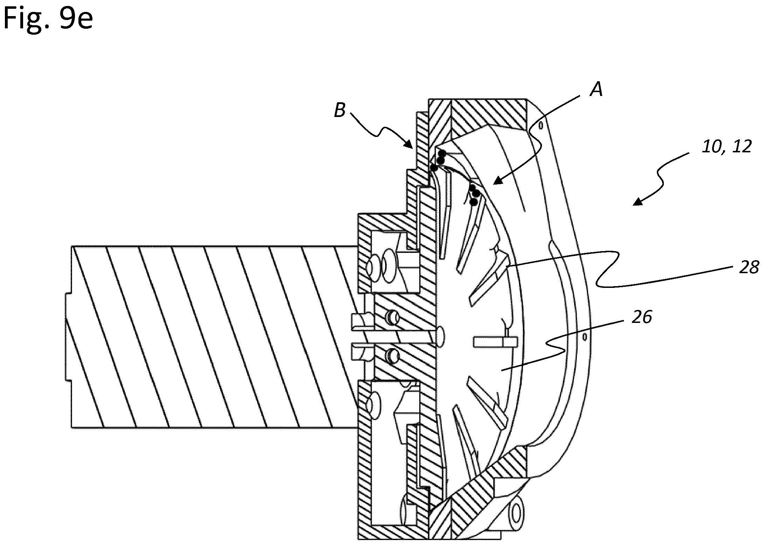

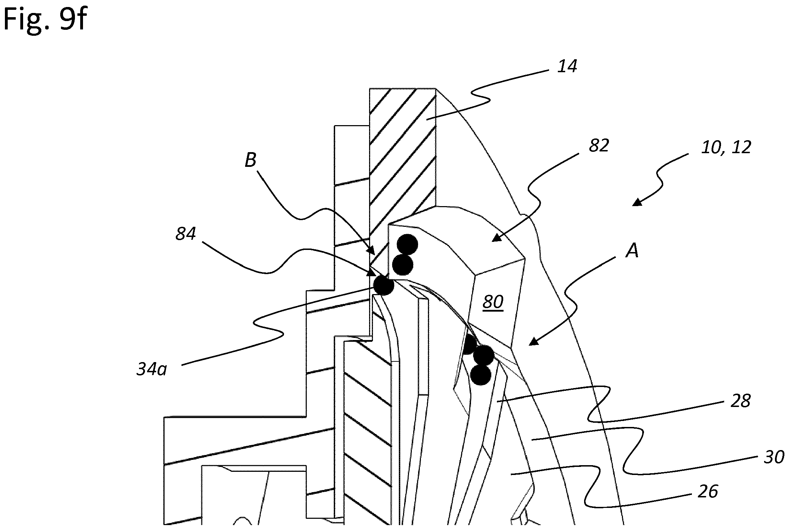

Die Längsschnittansicht der Fig. 9e und die vergrößerte Ansicht daraus der Fig. 9f verdeutlichen nochmals den Übergang des Kornführungsbereichs vom Füllbereich A, der sehr weit nach oben reicht, fast bis an den oberen Zenit der kreisförmigen Kornbewegung, in den Vereinzelungsbereich B, bei dem überzählige Körner nach oben und außen von der rotierenden Scheibe 26 abgedrängt werden, so dass jede der Mitnehmerstufen 28 nur noch genau ein Korn weitertransportiert und in Richtung zur Auslassöffnung befördert. Die Detailansicht der Fig. 9f lässt diesen Bereich des Gehäuses 14 nochmals deutlicher erkennen. Die Wandfläche 30 des Gehäuses 14 weist im Übergang von den Bereichen A nach B einen ausgeprägten Absatz 80 auf, so dass sich die Wandfläche 30 in einer Stufe bzw. dem Absatz 80 nach außen in Richtung zu einem größeren Durchmesser erweitert und einen Kornableitungsraum 82 bildet, in den die zunächst noch von der Mitnehmerstufe 28 entlang der Wandfläche 30 beförderten Körner 34 hineingleiten können. Nur das eine zu vereinzelnde Korn 34a verbleibt an der Mitnehmerstufe 28 der rotierenden Scheibe 26 und wird von dieser weiterbefördert, nun aber unterhalb des Kornableitungsraumes 82, auf kleinerem Radius des Gehäuses, wo es in einer im Querschnitt dreieckförmigen Kornführungsrille oder Kornführungskante 84 (vgl. hierzu auch Fig. 3b) einzeln weitertransportiert wird, bis es in weitgehend kreisförmigem bzw. sich im weiteren Verlauf in der Kurve 44 öffnenden Bewegungsverlauf (vgl. Fig. 7a) in Richtung zur Auslassöffnung abgegeben wird.

Diese ausgeprägte Kornführungskante 84 im Gehäuse findet sich in Fig. 7b allgemein als Absenkung 46 angedeutet. Die Kornführungskante 84 bzw. Rille in der kornführenden Innenmantelfläche des Gehäuses im Vereinzelungsbereich B ist für die Vereinzelungswirkung des Verteilaggregats 10 unverzichtbar, da ansonsten eine undefinierte Kornanzahl von jeder Mitnehmerstufe 28 durch das Gehäuse in Richtung zum Auslass geschoben würde, wodurch die gewünschte Funktion und Wirkungsweise des Gerätes erheblich beeinträchtigt, wenn nicht zunichte gemacht wäre.

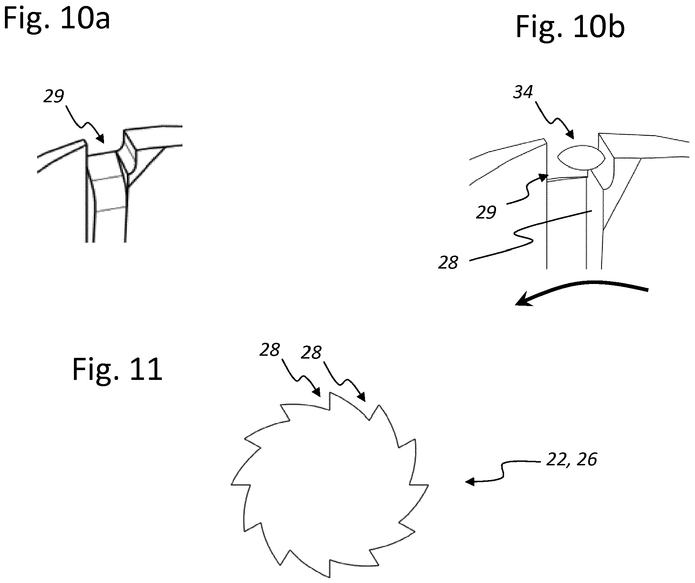

Die Figuren 10a und 10b zeigen alternative Scheibengestaltungen, bei denen die Mitnehmerstufen 28 deutlich kleiner als bei den zuvor gezeigten Varianten ausgebildet sind. Die Größe und Kontur der Nuten 29, die jeweils an die Mitnehmerstege 28 grenzen, sind jeweils an die zu handhabende Kornform und Korngröße ausgerichtet. Die schematische Darstellung der Fig. 11 zeigt dagegen eine sägeblattartige Kontur der Scheibe 26, deren Außenumfang mit einer Vielzahl von Mitnehmerstegen 28 versehen ist, die jeweils die Kontur von Sägezähnen aufweisen.

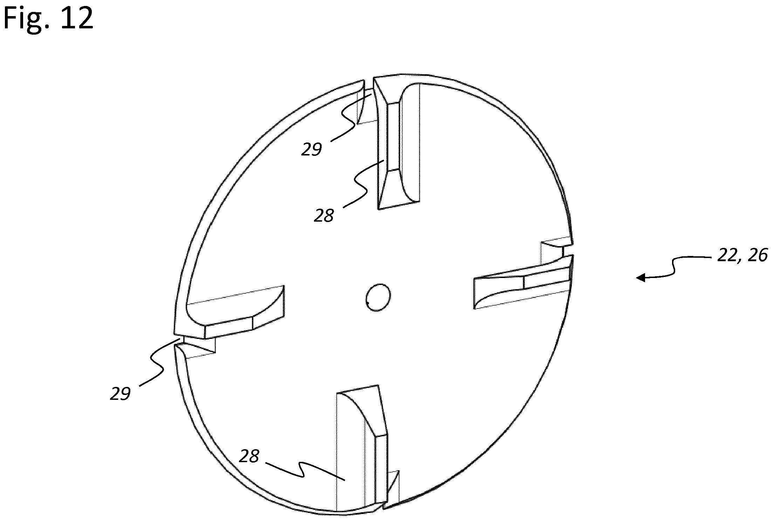

Die Kontur der Stege bzw. Stufen 28 und Nuten 29 der in Fig. 12 gezeigten Ausführungsvariante der Vereinzelungsscheibe 26 ähnelt der zuvor in den Darstellungen der Fig. 9 gezeigten Variante. Die Scheibe gemäß Fig. 12 weist allerdings vier Mitnehmerstufen 28 und daran jeweils angrenzende Nuten 29 auf, die jeweils um 90° zueinander versetzt sind.

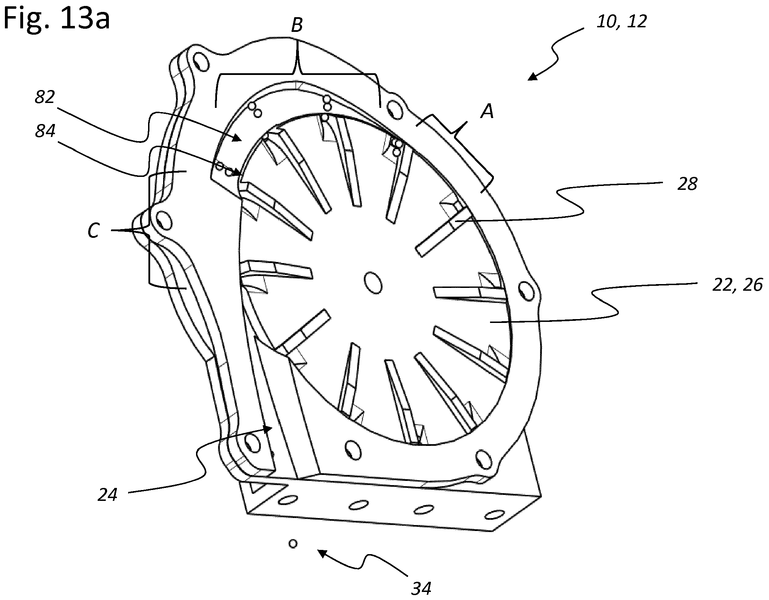

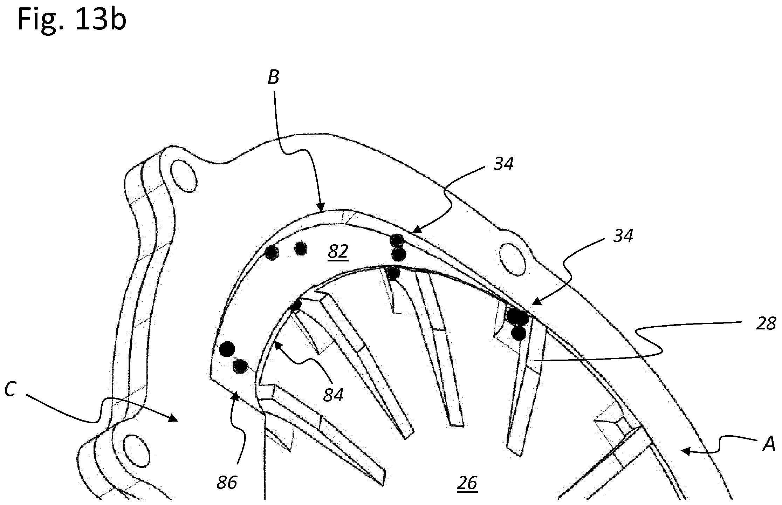

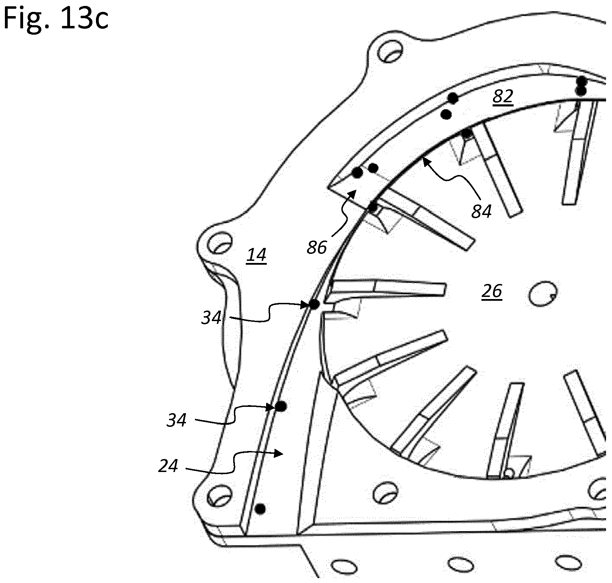

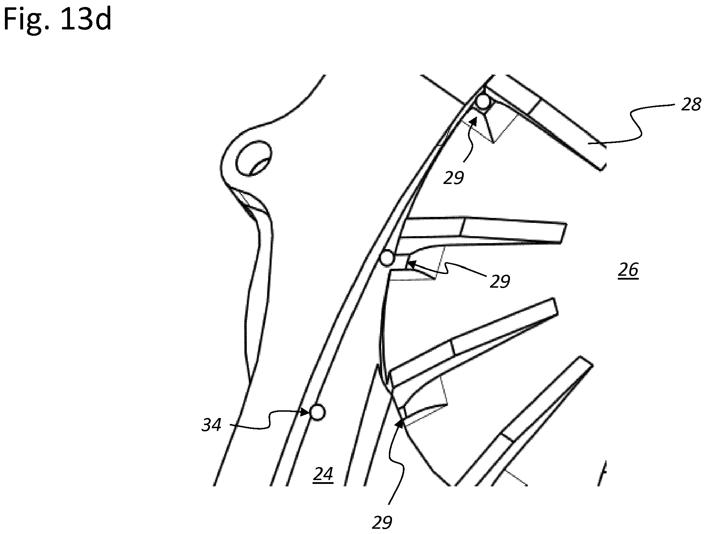

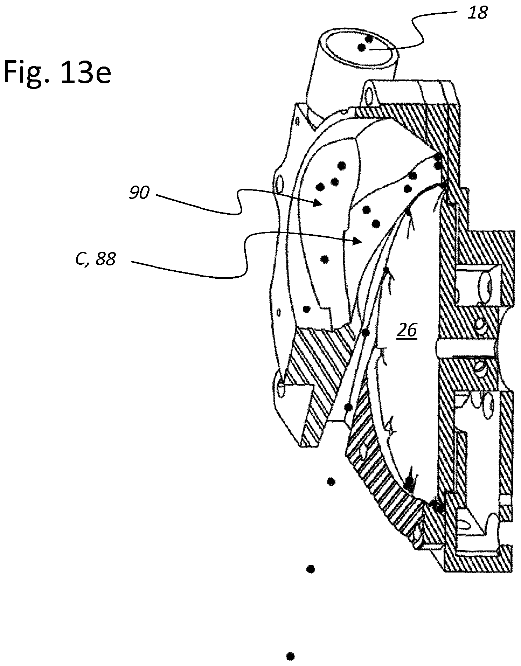

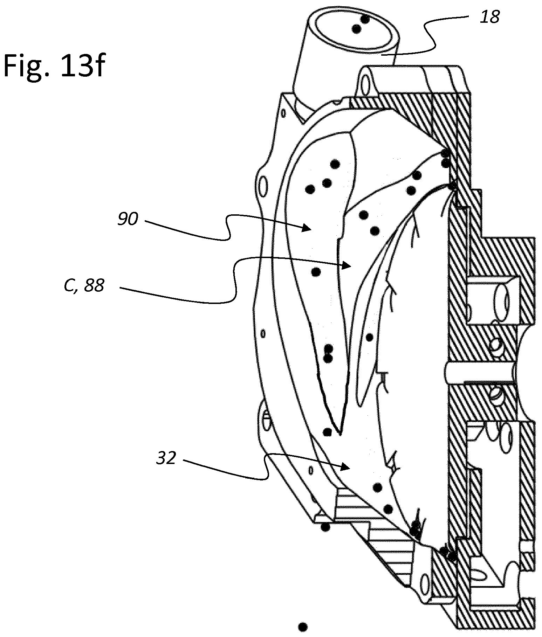

Die weiteren Darstellungen der Fig. 13 (Fig. 13a, Fig. 13b, Fig. 13c, Fig. 13d und Fig. 13e) zeigen allesamt Ausführungsvarianten einer Gehäusegestaltung und einer Vereinzelungsscheibe 26, die sich zur Vereinzelung und Aussaat von Raps eignet. So verdeutlichen die schematische Darstellung der Fig. 13a und der vergrößerte Ausschnitt der Fig. 13b die aufeinander folgenden Bereiche, in denen die Körner zunächst von den Mitnehmerstufen 28 der rotierenden Scheibe 26 aufgenommen werden. Der gesamte Füllbereich A liegt hierbei vor dem sich allmählich nach außen in den Vereinzelungsbereich B öffnenden Kornableitungsraum 82, wo solche Körner, die nicht einzeln in der dicht am Außenumfang der Scheibe 26 liegenden Kornführungsrille 84 geführt werden, nach außen abgeleitet und durch ihre umlaufende Bewegung in Richtung zu einem Rückführungsbereich C bewegt werden. Diese den Rückführungsbereich C passierenden Körner werden innerhalb des Gehäuses durch den dort herrschenden Luftstrom nochmals oder ggf. wiederholt zum Füllbereich A geleitet und können dort erneut von der Scheibe 26 aufgenommen und in die rotierenden Bewegungen versetzt werden. Der flache Kornableitungsraum 82 geht im Rückführungsbereich C in eine abgerundete Rampe 86 über, die in den Gehäuseinnenraum mündet und die Körner in eine Bewegung zwingt, wo sie von der Auslassöffnung 24 weggelenkt und in den Füllbereich im Gehäuse zurückführt werden (vgl. Fig. 13e). Die Rampe 86 bildet somit eine Art Rückströmschräge 88 (vgl. Fig. 13e) für überschüssige Körner, mit deren Hilfe diese wieder ins Gehäuse zurückgeführt und dem Füllbereich A zugeführt werden.

In den Darstellungen der Figuren 13a und 13b ist somit der Vereinzelungsverlauf von Saatgut deutlich erkennbar. Im Füllbereich A werden die Körner von den Mitnehmern 28 mitgenommen, wobei ein einzelnes Korn tief in die Scheibe eingetaucht ist und zwei weitere Körner aufgrund der schrägen Kontur ebenfalls in die Vereinzelungskammer oder Kornführungskante 84 drängen. Im Vereinzelungsbereich B wird das vereinzelte Korn in der schmäler werdenden Nut 84 bzw. Rille 84 weitergeführt, während die überschüssigen Körner seitlich vorbei, über den Förderkreis hinaus, über die Rampe 86 und die Schräge 88 (Fig. 13e) zurückgeleitet werden.

Die schematische Darstellung der Fig. 13c lässt deutlich erkennen, wie die außerhalb der Kornführungsrille 84 befindlichen und im Vereinzelungsbereich B im Kornableitungsraum 82 geführten Körner über die Rampe 86 in eine Richtung schräg zur Oberfläche der Scheibe 26 geleitet und damit von den exakt vereinzelten Körnern weggelenkt werden, die durch die Auslassöffnung 24 nach unten aus dem Gehäuse 14 abgegeben werden. Diese über die Rampe 86 geführten Körner landen wieder im Füllbereich A, und dies ggf. mehrfach.

Die Detailansicht der Fig. 13d lässt die bereits in den Figuren 9a bis 9d gezeigte Gestaltung der Vereinzelungsscheibe 26 erkennen, die in Förderrichtung vor den Mitnehmerstufen 28 jeweils die rechteckförmigen Nuten 29 und zugehörige Vertiefungen aufweist, so dass die einzelnen Körner dort geführt sind und eine abweichende Gestaltung des Vereinzelungsbereichs B und des Kornableitungsraumes 82 erlauben, der bspw. mit der ausgeprägten Stufe 80 entsprechend Fig. 9f ausgestaltet sein kann.

Die Teilschnittansichten der Fig. 13e und Fig. 13f lassen deutlich die in den Figuren 13a bis 13d nicht erkennbare Fortsetzung des Rückführungsbereichs C erkennen, der von der hier nicht erkennbaren Rampe 86 absatzlos, d.h. in abgerundeter Kontur, in eine breitere Schräge 88 mündet, die sich schließlich mit einer weiteren Schräge 90 schneidet, die von der oberen Einlassöffnung 18 ungefähr vertikal verläuft und durch welche Körner durch die Einlassöffnung 18 in das Gehäuseinnere geleitet werden. Die Fig. 13e verdeutlicht das Zusammentreffen rückgeführter überschüssiger und durch die Einlasslöffnung neu eintretender Körner. Die Körner werden im Vereinzelungsbereich B in zwei Gruppen aufgeteilt, nämlich vereinzelte Körner, welche nach unten abgegeben werden, und überschüssige Körner, welche im Gehäuse verbleiben. Die überschüssigen Körner werden hierbei über eine Schräge (Rückführungsbereich C) am Austritt 24 der vereinzelten Körner vorbeigeführt. Neue, von der Sämaschine zuströmende Körner gelangen über die Eingangsöffnung 18 in das Gehäuse und treffen im Gehäusebereich 16 auf die überschüssigen Körner aus Bereich C. Die neu eingeleiteten und überschüssigen Körner werden über die Schräge 88 und die weitere Schräge 16 bzw. 90 an der Ausgangsöffnung 24 vorbeigeleitet. Anschließend werden die Körner aufgrund der geneigten Kontur 32 der Gehäusefläche erneut zur Vereinzelungsscheibe 26 gedrängt.

In der Fig. 13f wird nochmals verdeutlicht, dass sich die Körner axial und radial von der Scheibe 26 weg und dann wieder zu dieser hinbewegen. Der Bewegungsablauf der Körner ist somit wie folgt: überschüssige Körner werden radial und axial von der Vereinzelungsscheibe 26 weggeführt; anschließend werden die Körner am Ausgangskanal 24 zur Abgabe der vereinzelten Körner vorbei geleitet und dabei radial der Vereinzelungsscheibe 26 wieder zugeführt; zum Schluss werden die Körner wiederum axial zur Vereinzelungsscheibe 26 geführt.

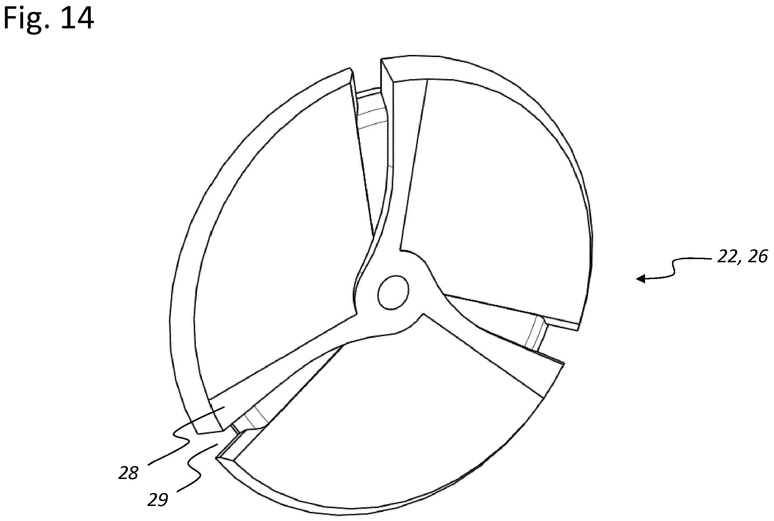

Die besonders für die Vereinzelung von Erbsen geeignete Variante der Vereinzelungsscheibe 26 gemäß Fig. 14 weist drei um jeweils 120° versetzt zueinander angeordnete Mitnehmerstufen 28 und korrespondierende Nuten 29 auf, wobei hier die Stufen 28 relativ flach, die Nuten 29 jedoch relativ groß ausgebildet sind.

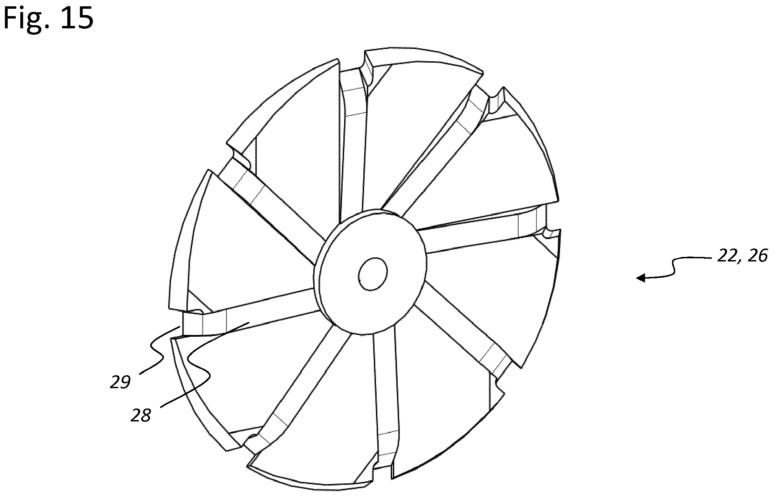

Die besonders für die Vereinzelung von Weizenkörnern geeignete Variante der Vereinzelungsscheibe 26 gemäß Fig. 15 weist insgesamt acht gleichmäßig über die Scheibenstirnfläche verteilt angeordnete Mitnehmerstufen 28 und korrespondierende Nuten 29 auf, wobei hier die Stufen wiederum 28 relativ flach, die Nuten 29 jedoch relativ groß ausgebildet sind.

Die in den Figuren 13 gezeigten Scheibenvarianten eignen sich besonders zur Vereinzelung von Rapskörnern, während die Variante der Fig. 14 besonders für die Vereinzelung von Erbsen geeignet ist. Die in den Figuren 15, 16 und 17 gezeigten Varianten eignen sich besonders für die Vereinzelung von Weizenkörnern. Wie es die perspektivischen Ansichten der Fig. 13 erkennen lassen, sind an der Scheibenstirnfläche der besonders zur Vereinzelung von Rapskörnern vorgesehenen Scheiben 26 eine Vielzahl von Stegen 28 und Nuten 29 angeordnet, die eine relativ langsame Umdrehung der Scheibe 26 und dennoch eine ausreichende Förderkapazität ermöglichen.

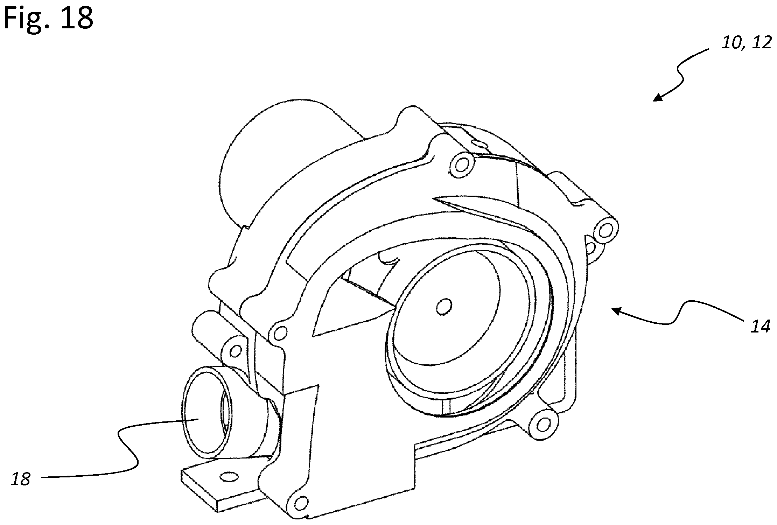

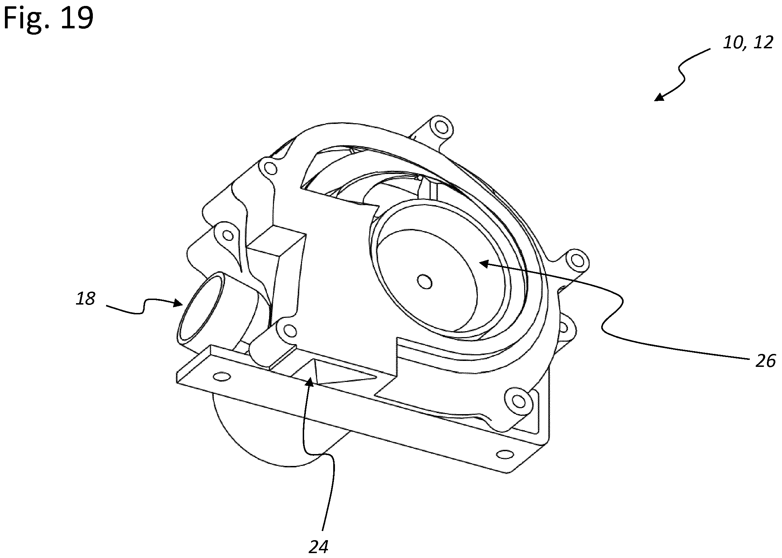

Die schematischen Perspektivdarstellungen der Figuren 18 und 19 zeigen jeweils eine weitere Variante eines erfindungsgemäßen Dosiersystems bzw. Verteilaggregats 10 mit einer waagrechten Einlassöffnung 18, die wie bei den zuvor gezeigten Varianten ebenfalls tangential in die Innenmantelfläche 16 des Gehäuses 14 mündet. Wie es die Fig. 18 erkennen lässt, befindet sich die Einlauföffnung 18 an einer tief liegenden Stelle des Gehäuses 14, was den Körnern schon vor dem Eintritt oder während des Eintritts in das Gehäuse 14 eine kreisförmige Bewegung aufprägen kann. Somit kann gewährleistet werden, dass die Körner an der Wandung bleiben und geführt werden und die Vereinzelungsscheibe 26 möglichst weit außen erreichen. Die an der Bodenseite des Gehäuses 14 angeordnete Auslassöffnung 24 mündet senkrecht nach unten, wie es die Fig. 19 erkennen lässt.

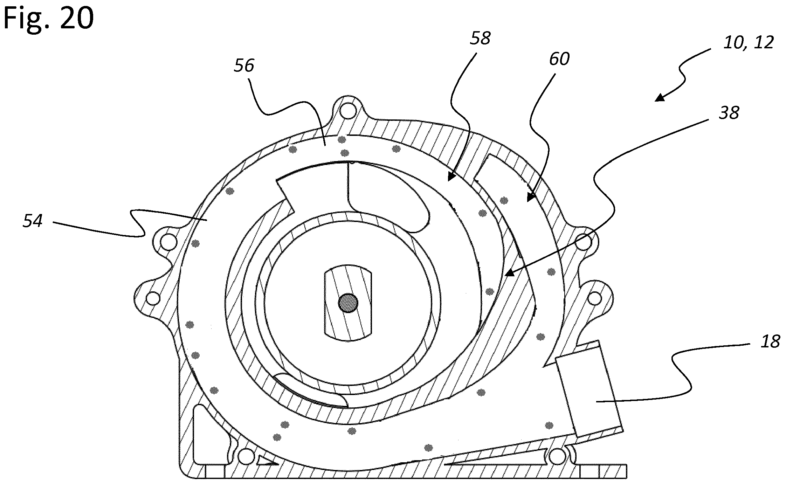

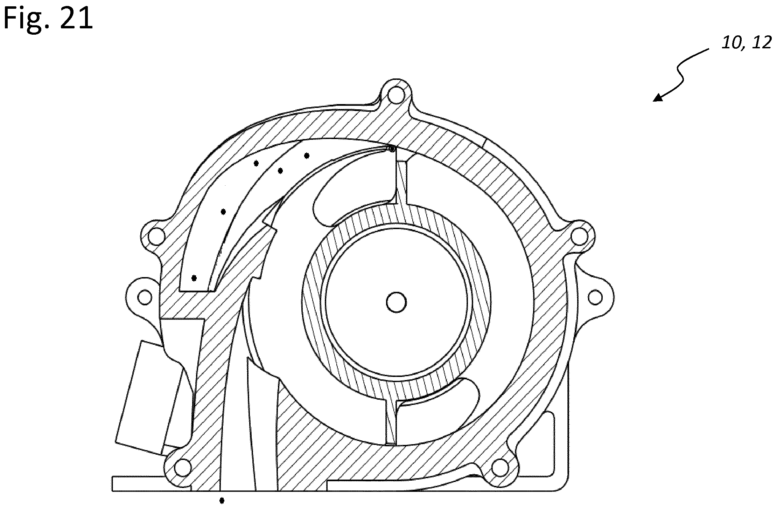

Schnittdarstellungen dieser Variante mit der in Fig. 18 und Fig. 19 gezeigten Luftführung mit unten liegendem Einlass 18 sind zudem in der Fig. 20 und in Fig. 21 gezeigt. Auch dort wird die Luftströmung entlang der Scheibe 26 in tangentialer Richtung geführt, wobei es eine Einfüllseite hinter und eine Austrittseite vor der Vereinzelungsscheibe 26 gibt. Wie anhand der Fig. 20 näher erläutert wird, tritt die Luftströmung 20 durch die Einlassöffnung 18 in das Gehäuse 14 ein und umströmt die Dosierung zunächst in einem geschlossenen Kanal 54 sowie anschließend in einem geöffneten Kanal 56, wonach schließlich die Zuführung zur Vereinzelungsscheibe 26 erfolgt. Wie bei den zuvor gezeigten Ausführungsvarianten werden die Körner an die Vereinzelungsscheibe 26 gedrängt und über den Stegabschnitt 38 zur Abgabe geschoben. Die verbleibenden Körner auf der Zuführseite gelangen auf Grund der Kontur des Stegabschnittes 38 wieder in die Ausgangsströmung 58. Die verbleibenden Körner der Austrittseite gelangen über einen Kanal 60 ebenfalls zur Zuführströmung.

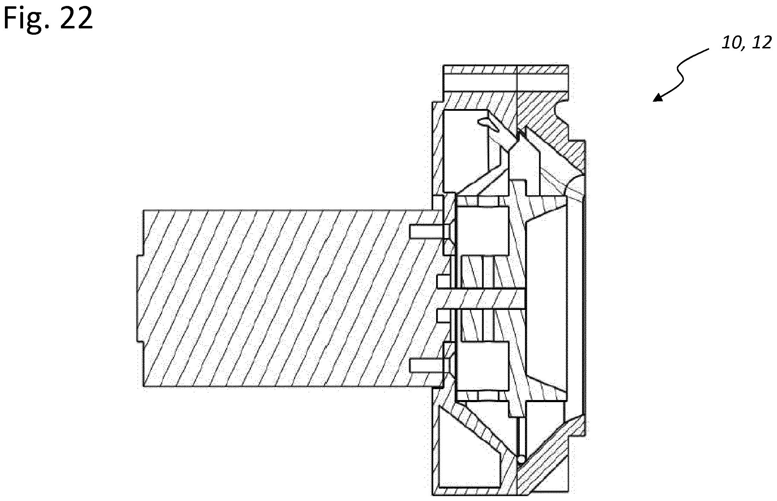

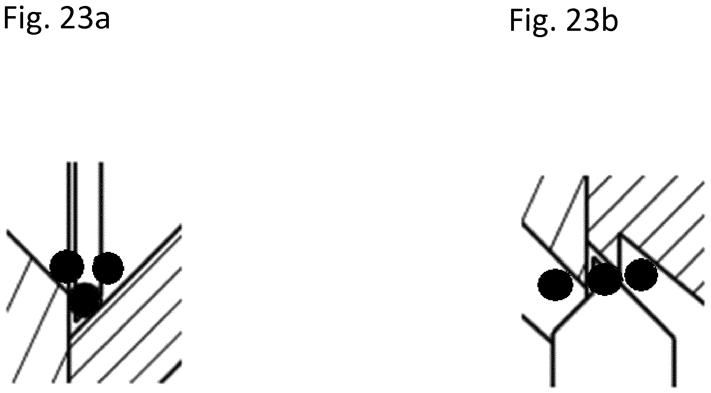

Die Längsschnittansicht der Fig. 22 sowie die Detailansichten der Fig. 23a und Fig. 23b lassen nochmals Einzelheiten des Aufbaus und der Kornführung erkennen.

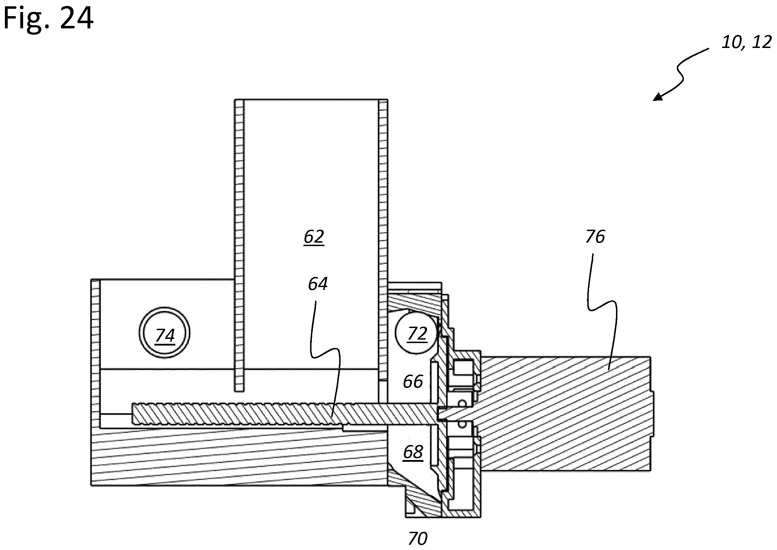

Die schematischen Figuren 24 bis 27 verdeutlichen eine weitere Ausführungsvariante eines erfindungsgemäßen Verteilaggregats 10 bzw. Säaggregats, bei dem die Verteilung der Körner ohne tragenden Luftstrom, sondern auf rein mechanischem Weg erfolgt. Das Saatgut wird aus einem Behälter 62 zugeführt. Anschließend transportiert eine Schnecke 64, welche von der Vereinzelungsscheibe 66 angetrieben wird, die Körner zur Vereinzelungskammer 68. In der Vereinzelungskammer 68 werden die Körner separiert, wobei ein Teil der überbleibenden Körner direkt in der Kammer 68 verbleibt und über die Ausgangsöffnung 70 hinweg erneut zur Vereinzelungsscheibe 66 zugeführt werden. Parallel dazu wird auch ein Teil der Übermenge wieder über eine Überströmöffnung 72 zum Anfang 74 der Schnecke 64 transportiert, um ein Überladen zu vermeiden.

Das Größenverhältnis des Durchmessers der Schnecke 64 zum Durchmesser der Vereinzelungsscheibe 66 kann je nach Bedarf sehr groß sein. Damit kann erreicht werden, dass trotz einer langsam laufenden Schnecke 64 an der Vereinzelungsscheibe 66 eine ausreichend hohe Umlaufgeschwindigkeit erreicht werden kann. Alternativ wäre hier auch eine Übersetzung denkbar.

Die Schnecke 64 und die Vereinzelungsscheibe 66 werden bei dieser Ausführungsvariante vorzugsweise von einem Elektromotor 76 angetrieben, dessen Drehzahl je nach Bedarf in Anpassung an die Vorschubgeschwindigkeit, den Kornabstand etc. variabel ist.

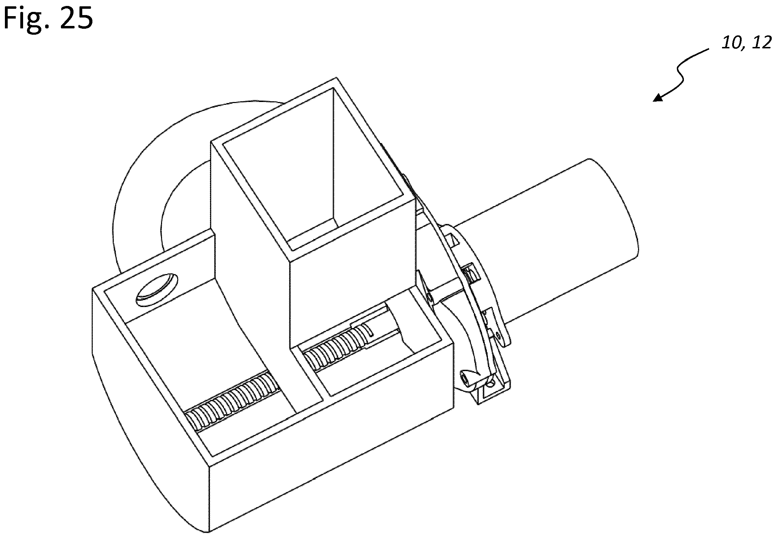

Die Figuren 25, 26 und 27 zeigen die Ausführungsvariante des Verteilaggregats 10 gemäß Fig. 24 in verschiedenen Ansichten.

### Bezugszeichenliste:

- 10: Verteilaggregat
- 12: Säaggregat
- 14: Gehäuse
- 16: Innenmantelfläche
- 18: Einlassöffnung
- 20: Luftströmung
- 22: Fördereinrichtung
- 24: Auslassöffnung
- 26: Scheibe, Vereinzelungsscheibe, Säscheibe
- 28: Stufe, Mitnehmerstufe
- 29: Nut
- 30: Wandfläche
- 32: geneigte Gehäusefläche
- 34: Korn (34a, 34b)
- 36: Auswurfbereich
- 38: Stegabschnitt
- 40: Rampenabschnitt
- 42: Kreisbahn
- 44: geöffnete Kurve
- 45: gerader Verlauf
- 46: Absenkung
- 48: erste Phase
- 50: zweite Phase
- 52: dritte Phase
- 54: geschlossener Kanal
- 56: geöffneter Kanal
- 58: Ausgangsströmung
- 60: Kanal
- 62: Behälter
- 64: Schnecke
- 66: Vereinzelungsscheibe
- 68: Vereinzelungskammer
- 70: Ausgangsöffnung
- 72: Überströmöffnung
- 74: Anfang der Schnecke
- 76: Elektromotor, Antriebsmotor
- 80: Absatz, Stufe
- 82: Kornableitungsraum
- 84: Kornführungsrille, Kornführungskante
- 86: Rampe
- 88: Schräge
- 90: weitere Schräge

- A: Füllbereich
- B: Vereinzelungsbereich
- C: Rückführungsbereich

## Patentansprüche

1. Verteilaggregat (10) für körniges Gut wie Samenkörner (34), Dünger o. dgl., insbesondere Säaggregat (12) einer Verteil- oder Sämaschine, umfassend ein Gehäuse (14) mit annähernd kreisbahn- und/oder kreissegmentförmiger Innenmantelfläche (16), wenigstens einer Einlassöffnung (18) für befördertes körniges Gut oder beförderte Samenkörnern (34), einer im Gehäuse (14) konzentrisch rotierenden Fördereinrichtung (22) für das beförderte körnige Gut bzw. die beförderten Samenkörner (34) sowie wenigstens einer Auslassöffnung (24), die annähernd tangential an die Innenmantelfläche (16) anschließt, wobei die Fördereinrichtung (22) eine oder mehrere Öffnungen und Mitnehmer (28) an ihrem Außenbereich aufweist, die in einem ersten Gehäuse- und/oder Förderbereich mit der Gehäuseinnenmantelfläche (16) eine Fördertasche bildet bzw. bilden, in der die Körner (34) gedrängt werden und durch Zentrifugalkräfte, unterstützt durch die Fördereinrichtung (22), kreisförmig befördert werden und in einem zweiten Gehäuse- und/oder Vereinzelungsbereich durch eine veränderte Kontur der Innenmantelfläche (16) des Gehäuses (14) nur jeweils ein einzelnes Korn (34) weiterhin unter Zentrifugalkrafteinflüssen in der Öffnung bzw. am Mitnehmer (28) der Fördereinrichtung (22) verbleibt und überschüssige Körner (34) abgesondert werden und diese wiederum zur erneuten Förderung in den ersten Gehäusebereich zurück geführt werden, **dadurch gekennzeichnet, dass** die Innenmantelfläche (16) des Gehäuses (14) zumindest in Nähe der Auslassöffnung (24) eine nutförmige Struktur aufweist, deren Abmessungen mit der Größe der einzelnen Körner (34) korrespondieren, wobei Teile der Vereinzelungsnut austauschbar sind, und wobei eine derartige Vereinzelungsnut als Teil des Gehäuses (14) in die Innenmantelfläche (16) einsetzbar ist.

2. Verteilaggregat nach Anspruch 1, bei dem die Innenmantelfläche (16) des Gehäuses (14) einzeln oder zusammen mit der Fördereinrichtung (22) eine mindestens zweiseitige axiale Führung für die einzelnen Körner (34) ausbildet, welche das Korn (34) axial führt, während es von der Fördereinrichtung (22) mit Unterstützung von Zentrifugalkräften, welche größer der Gewichtskraft sind, geschoben wird.

3. Verteilaggregat nach Anspruch 2, bei dem zumindest auf einer Seite die axiale Führungsbahn an einer Stelle in der Höhe reduziert wird und/oder im Querschnitt verjüngt ist, wodurch ein Freiraum gebildet ist, in welchen mitgenommene überschüssige Körner (34) durch die Zentrifugalkraft gedrängt werden, und somit nur jeweils ein Korn in der gewünschten Führungsbahn verbleibt.

4. Verteilaggregat nach Anspruch 2 oder 3, bei dem zumindest auf einer Seite die axiale Führungsbahn in der Breite verschmälert oder reduziert ist, wodurch ein Freiraum nach außen gebildet ist, insbesondere als bzw. in Gestalt einer Radialerweiterung, in welchem mitgenommene überschüssige Körner (34) durch die Zentrifugalkraft gedrängt werden, und somit nur jeweils ein Korn in der verschmälerten gewünschten Führungsbahn verbleibt.

5. Verteilaggregat nach einem der Ansprüche 2 bis 4, bei dem zumindest auf einer Seite der axialen Führungsbahn ein Freiraum besteht, in welchen mitgenommene überschüssige Körner durch die Zentrifugalkraft nach außen weg, über den Förderkreis hinaus, gedrängt werden, und somit nur jeweils ein Korn in der Fördereinrichtung (22) verbleibt.

6. Verteilaggregat nach einem der Ansprüche 1 bis 5, bei dem die Öffnungen und Mitnehmer (28) der Fördereinrichtung (22) mit der Innenmantelfläche (16) des Gehäuses (14) eine Fördertasche bilden, wobei die Mantelfläche von einem breiten in einen ganz schmal werdenden Bereich übergeht, so dass die schmale Mantelflächenbreite nur noch ausreichend Führung für ein zu förderndes Korn bietet.

7. Verteilaggregat nach einem der Ansprüche 1 bis 6, bei dem der Körnerstrom zur Fördereinrichtung (22) tangential zugeführt wird und die Fördereinrichtung (22) wieder tangential verlässt.

8. Verteilaggregat nach einem der Ansprüche 1 bis 7, bei dem sich nahezu keine ruhenden Körner im Gehäuse (14) befinden, sondern lediglich überschüssige und/oder abgesonderte Körner des Körnerstroms, die eine oder mehreren Umdrehungen im Gehäuse (14) verbleiben, und dabei um die Achse des Gehäuses (14) rotieren, um Förderlücken zu schließen.

9. Verteilaggregat nach einem der Ansprüche 1 bis 8, bei dem der Körnerstrom tangential in das Gehäuse (14) zugeführt wird, dort um die Drehachse rotiert, und anschließend wieder tangential das Gehäuse (14) verlässt.

10. Verteilaggregat nach einem der Ansprüche 1 bis 9, bei dem die überschüssigen Körner den einströmenden Körnern zugeführt werden und anschließend auf Grund der zur Fördereinrichtung (22) geneigten Mantelfläche in die Fördereinrichtung (22) gedrängt werden.

11. Verteilaggregat nach einem der Ansprüche 1 bis 10, bei dem der zuführende Körnerstrom zur Fördereinrichtung (22) vor und während der Aufnahme an der Mantelfläche entlang gleitet, welche eine nahezu koaxiale Form zur Fördereinrichtung (22) bildet und somit der Körnerstrom zur aufnehmenden Fördereinrichtung (22) nahezu gleichgerichtet ist.

12. Verteilaggregat nach einem der Ansprüche 1 oder 2, bei dem die Absonderung der überschüssigen Körner einseitig und beidseitig erfolgen kann.

13. Verteilaggregat nach einem der Ansprüche 1 bis 12, bei dem die Innenmantelfläche (16) des Gehäuses (14) der jeweiligen Kornform angepasst ist.

14. Verteilaggregat nach einem der Ansprüche 1 bis 13, bei dem die Öffnung der Fördereinrichtung (22) zur jeweiligen Kornform angepasst ist.

15. Verteilaggregat nach einem der Ansprüche 1 bis 14, bei dem die Kornzuführung per Förderluftstrom (20) oder aus dem Kornvorratsbehälter erfolgen kann.

16. Verteilaggregat nach einem der Ansprüche 1 bis 15, bei dem die Rückführung der überschüssigen Körner pneumatisch mit Unterstützung des Förderluftstroms (20) oder mechanisch mit Unterstützung des Leitelements in Form von einer Rampe (86) erfolgen kann.

## Claims

1. A distribution unit (10) for granular material, such as seed grains (34), fertilisers, or the like, in particular, a sowing unit (12) of a distribution machine or sowing machine, the distribution unit (10) comprising a housing (14) with an inner cover surface (16) approximately in the form of a circular path and/or of a circle segment, with at least one inlet opening (18) for granular material or seed grains (34) being conveyed, with a conveying means (22) for the granular material or, as applicable, for the seed grains (34) being conveyed, which conveying means (22) rotates concentrically in the housing (14), as well as with at least one outlet opening (24) connecting approximately tangentially to the inner cover surface (16), wherein the conveying means (22) on its outer area has one or more apertures and drivers (28) forming a conveyor pocket with the housing's inner cover surface (16) in a first housing section and/or conveying section, in which conveyor pocket the grains (34) are pushed and conveyed circularly by centrifugal forces supported by the conveying means (22), and, by means of a modified contour of the inner cover surface (16) of the housing (14) in a second housing section and/or separation section, and under the influence of centrifugal forces, in each case only one single grain (34) continues to remain in the aperture or, as applicable, at the driver (28) of the conveying means (22), and excess grains (34) are discharged and fed back into the first housing section for being in turn conveyed again, **characterised in that** the inner cover surface (16) of the housing (14) at least in the vicinity of the outlet opening (24) has a groove-shaped structure the dimensions of which correspond to the size of the individual grains (34), wherein parts of the separating groove are replaceable, and wherein a suchlike separating groove is insertable into the inner cover surface (16) as part of the housing (14).

2. The distribution unit according to claim 1, in which the inner cover surface (16) of the housing (14) on its own or together with the conveying means (22) forms an at least two-sided axial guiding for the single grains (34), which guiding axially guides the grain (34) while the grain (34) is being pushed by the conveying means (22) with the support of centrifugal forces, which are greater than the weight.

3. The distribution unit according to claim 2, in which the axial guideway is reduced in height and/or tapers in cross section at least on one side in one place, whereby a free space is formed into which driver-moved excess grains (34) are pushed by means of the centrifugal force, and thus in each case only one grain remains in the intended guideway.

4. The distribution unit according to claim 2 or 3, in which the axial guideway is narrowed or reduced in width at least on one side, whereby a free space to the outside is formed, in particular as or in the form of a radial extension in which driver-moved excess grains (34) are pushed by means of the centrifugal force, and thus in each case only one grain remains in the narrowed, intended guideway.

5. The distribution unit according to one of the claims 2 to 4, in which at least on one side of the axial guideway there is a free space into which driver-moved excess grains are pushed away outward beyond the conveying circle by means of the centrifugal force, and thus in each case only one grain remains in the conveying means.

6. The distribution unit according to one of the claims 1 to 5, in which the apertures and drivers (28) of the conveying means (22) form a conveyor pocket with the inner cover surface (16) of the housing (14), wherein the cover surface merges from a wide to a very narrowly tapering section such that the narrow width of the cover surface offers only sufficient guiding for one grain to be conveyed.

7. The distribution unit according to one of the claims 1 to 6, in which the grain flow is fed tangentially to the conveying means (22) and then leaves the conveying means (22) tangentially.

8. The distribution unit according to one of the claims 1 to 7, in which there are nearly no grains resting in the housing (14), but rather only excess grains and/or grains discharged from the grain flow, which remain in the housing (14) for one or more rotations and in the process rotate about the axis of the housing (14) in order to close conveying gaps.

9. The distribution unit according to one of the claims 1 to 8, in which the grain flow is fed tangentially into the housing (14), rotates about the axis of rotation there, and subsequently leaves the housing (14) tangentially.

10. The distribution unit according to one of the claims 1 to 9, in which the excess grains are fed to the inflow of grains and are subsequently pushed into the conveying means (22) due to the cover surface being inclined toward the conveying means (22).

11. The distribution unit according to one of the claims 1 to 10, in which the grain flow feeding to the conveying means (22) glides along the cover surface prior to and during intake, with the cover surface assuming a form that is nearly coaxial with the conveying means (22), and with the grain flow thus being nearly in alignment with the in-taking conveying means (22).

12. The distribution unit according to one of the claims 1 or 2, in which the discharge of the excess grains can be carried out on one side and on both sides.

13. The distribution unit according to one of the claims 1 to 12, in which the inner cover surface (16) of the housing (14) is adapted to the particular form of the grains.

14. The distribution unit according to one of the claims 1 to 13, in which the opening of the conveying means (22) is adapted to the particular form of the grains.

15. The distribution unit according to one of the claims 1 to 14, in which the grain feed can be carried out via a conveying airflow (20) or from the grain storage hopper.

16. The distribution unit according to one of the claims 1 to 15, in which the return of the excess grains can be carried out pneumatically with the support of the conveying airflow (20) or mechanically with the support of the guide element in the form of a ramp (86).

## Revendications

1. Groupe de distribution (10) de produits granuleux tels que graines (34), engrais ou équivalents, notamment groupe semoir (12) d'une machine de distribution ou semoir, comprenant un boîtier (14) avec une surface d'enveloppe intérieure (16) de forme approximativement circulaire et/ou de segment circulaire, au moins une ouverture d'entrée (18) de produit granuleux transporté ou de graines transportées (34), des moyens de transport (22) en rotation concentrique dans le boîtier (14) pour le produit granuleux transporté ou les graines transportées (34) ainsi qu'au moins une ouverture de sortie (24), qui débouche approximativement tangentiellement à la surface d'enveloppe intérieure (16), les moyens de transport (22) présentant une ou plusieurs ouvertures et entraineurs (28) à leur zone extérieure, laquelle/lesquelles forme ou forment, dans une première zone de boîtier et/ou de transport, avec la surface d'enveloppe intérieure de boîtier (16), une poche de transport dans laquelle les graines (34) sont repoussées et transportées de manière circulaire par forces centrifuges, aidées par les moyens de transport (22) et, dans une deuxième zone de boîtier ou d'individualisation, par un contour modifié de la surface d'enveloppe intérieure (16) du boîtier (14), il ne reste qu'une seule graine (34), toujours sous l'influence de la force centrifuge, dans l'ouverture ou dans l'entraîneur (28) des moyens de transport (22) et les graines en excédent (34) étant éliminées et étant à leur tour reconduites dans la première zone de boîtier pour être à nouveau transportées, **caractérisé en ce que** la surface d'enveloppe intérieure (16) du boîtier (14) présente au moins à proximité de l'ouverture de sortie (24), une structure en forme d'encoche dont les dimensions correspondent à la taille des différentes graines (34), des pièces de l'encoche d'individualisation pouvant être remplacées et une telle encoche d'individualisation pouvant être mise en oeuvre en tant que pièce du boîtier (14) dans la surface d'enveloppe intérieure (16).

2. Groupe de distribution selon la revendication 1, dans lequel la surface d'enveloppe intérieure (16) du boîtier (14) réalise, seule ou en commun avec les moyens de transport (22), au moins un guidage axial bilatéral pour chaque graine (34), ledit guidage guidant la graine (34) de manière axiale alors que ladite graine est poussée par les moyens de transport (22) soutenus par forces centrifuges supérieures au poids.

3. Groupe de distribution selon la revendication 2, dans lequel sur au moins un côté, la voie de guidage axiale est réduite en hauteur à un endroit et/ou se rétrécit en section, ce qui génère un espace libre dans lequel les graines (34) en excédent entraînées sont poussées par la force centrifuge, et qu'ainsi à chaque fois seule une graine reste dans la voie de guidage souhaitée.

4. Groupe de distribution selon la revendication 2 ou 3, dans lequel sur au moins un côté, la voie de guidage axiale se rétrécit ou est réduite en largeur, ce qui génère un espace libre vers l'extérieur, notamment en tant que ou sous la forme d'un élargissement radial, dans lequel les graines (34) en excédent entraînées sont poussées par la force centrifuge, et qu'ainsi à chaque fois seule une graine reste dans la voie de guidage rétrécie souhaitée.

5. Groupe de distribution selon l'une quelconque des revendications 2 à 4, dans lequel existe, sur au moins un côté de la voie de guidage axiale, un espace libre dans lequel les graines en excédent entraînées sont repoussées vers l'extérieur, en dehors du cercle de transport, et qu'ainsi ne reste à chaque fois plus qu'une seule graine dans les moyens de transport.

6. Groupe de distribution selon l'une quelconque des revendications 1 à 5, dans lequel les ouvertures et entraineurs (28) des moyens de transport (22) forment une poche de transport avec la surface d'enveloppe intérieure (16) du boîtier (14), la surface d'enveloppe passant d'une zone large à une zone devenant de plus en plus étroite, de telle sorte que la largeur étroite de surface d'enveloppe n'offre plus que suffisamment de place au guidage d'une seule graine à transporter.

7. Groupe de distribution selon l'une quelconque des revendications 1 à 6, dans lequel le flux de graines est amené tangentiellement aux moyens de transport (22) et ressort tangentiellement desdits moyens de transport (22).

8. Groupe de distribution selon l'une quelconque des revendications 1 à 7, dans lequel pratiquement aucune graine en repos ne se trouve dans le boîtier (14) mais seulement des graines en excédent et/ou éliminées du flux de graines et qui restent dans le boîtier (14) pour un ou plusieurs tours de rotation et qui tournent autour de l'axe du boîtier (14) pour fermer des trous de transport.

9. Groupe de distribution selon l'une quelconque des revendications 1 à 8, dans lequel le flux de graines est amené tangentiellement dans le boîtier (14), y tourne autour de l'axe de rotation pour quitter à nouveau le boîtier (14) tangentiellement.

10. Groupe de distribution selon l'une quelconque des revendications 1 à 9, dans lequel les graines en excédent sont amenées aux graines affluentes pour être ensuite repoussées dans les moyens de transport (22), vu que la surface d'enveloppe est inclinée vers les moyens de transport (22).

11. Groupe de distribution selon l'une quelconque des revendications 1 à 10, dans lequel le flux de graines amenant en direction des moyens de transport (22) glisse, avant et pendant la réception, le long de la surface d'enveloppe, laquelle réalise une forme pratiquement coaxiale avec les moyens de transport (22), et le flux de graines étant ce faisant presque dans la même direction que les moyens de transport (22) récepteurs.

12. Groupe de distribution selon l'une quelconque des revendications 1 ou 2, dans lequel l'élimination des graines en excédent peut être réalisée sur un côté ou sur deux côtés.

13. Groupe de distribution selon l'une quelconque des revendications 1 à 12, dans lequel la surface d'enveloppe intérieure (16) du boîtier (14) est adaptée à la forme de graine correspondante.

14. Groupe de distribution selon l'une quelconque des revendications 1 à 13, dans lequel l'ouverture des moyens de transport (22) est adaptée à la forme de graine correspondante.

15. Groupe de distribution selon l'une quelconque des revendications 1 à 14, dans lequel l'acheminement des graines peut être réalisé par flux d'air de transport (20) ou à la sortie du réservoir de graines.

16. Groupe de distribution selon l'une quelconque des revendications 1 à 15, dans lequel l'acheminement de retour des graines en excédent peut s'effectuer de manière pneumatique à l'aide du flux d'air de transport (20) ou de manière mécanique à l'aide de l'élément de guidage sous forme d'une rampe (86).
